# EUROPEAN PATENT SPECIFICATION

(11) **EP 3 749 726 B1**
(45) Date of publication and mention of the grant of the patent: **18.11.2026**
(21) Application number: 19708703.4
(22) Date of filing: 08.02.2019
(51) Int. Cl.: C09J 5/04, C09J 7/30, C09J 7/50, C08K 3/10, C08K 5/14, C08K 5/1535

(54) **PRIMER-INITIATED CURE OF STRUCTURAL ADHESIVE FILM**
PRIMERINITIIERTE HÄRTUNG EINER STRUKTURKLEBEFOLIE
DURCISSEMENT INITIÉ PAR PRIMAIRE D'UN FILM ADHÉSIF STRUCTURAL

(30) Priority: 09.02.2018 US 201862628702 P; 10.10.2018 US 201862743907 P
(43) Date of publication of application: 16.12.2020
(73) Proprietor: 3M Innovative Properties Company, Saint Paul, Minnesota 55133-3427 (US)
(72) Inventor: RANADE, Shantanu, R., Saint Paul, Minnesota 55133-3427 (US); KUGEL, Alexander, J., Saint Paul, Minnesota 55133-3427 (US); CLAUSSEN, Kai, U., 41453 Neuss (DE); KHURANA, Rachna, Saint Paul, Minnesota 55133-3427 (US); MOREN, Dean, M., Saint Paul, Minnesota 55133-3427 (US); SIKORSKI, William, H., Jr., Saint Paul, Minnesota 55133-3427 (US); TOWNSEND, Erik, M., Saint Paul, Minnesota 55133-3427 (US)
(74) Representative: Vossius & Partner Patentanwälte Rechtsanwälte mbB
(86) International application number: PCT/US2019/017187
(87) International publication number: WO 2019/157264

(56) References cited:
- WO-A1-2012/043664
- WO-A1-2017/095704
- CN-B- 104 497 892
- DE-A1- 102015 009 764
- GB-A- 2 121 811

## Description

### Field of the Disclosure

This disclosure relates to curable adhesive films and tapes comprising such films and primers that initiate cure of the curable adhesive films upon contact resulting in structural adhesive bonds. In some embodiments the curable adhesive films are pressure sensitive adhesives before cure.

### Background of the Disclosure

The following references may be relevant to the general field of technology of the present disclosure: US 2005/0214497; JPS 6026079; CA 1,301,616; DE 10259457; EP 0140006; EP 0232936; EP 0889105; EP 1800865; GB 1,448,257; JP 09/111193; US 2004/0228998; US 2005/0230960; US 2008/0242764; US 2010/0061823; US 2010/0255239; US 2013/0052460; US 2016/0289513; US 3,625,875; US 3,639,500; US 3,994,764; US 3,996,308; US 4,170,612; US 4,316,000; US 4,373,077; US 4,452,955; US 4,472,231; US 4,569,976; US 4,945,006; US 4,946,529; US 5,003,016; US 5,106,808; US 6,734,249; and WO 2014/078115.
GB2121811A discloses a two-part adhesive composition.
WO2012043664A1 discloses a curable resin composition.
DE102015009764A1 discloses a reactive adhesive film system.
CN104497892A discloses an acrylate adhesive.
WO2017095704A1 discloses a redox polymerizable composition.

### Summary of the Disclosure

### The present invention is as stated in the claims.

Briefly, the present disclosure **discloses** a primer for adhesion of a curable adhesive film to a first substrate comprising: a) a first film-forming polymer or oligomer; b) a species comprising first unsaturated free-radically polymerizable groups, which may be a) or may be a species other than a); c) a transition metal cation; and d) an oxidizing agent which is not a), b), or c); wherein the primer is a liquid at normal temperature and pressure. In some embodiments, b) is a). In some embodiments, b) is a species other than a) and a) does not comprise unsaturated free-radically polymerizable groups. Additional embodiments of this primer of the present disclosure are described below under "Selected Embodiments" and demonstrated in the Examples.

In another aspect, the present disclosure **discloses** a curable adhesive free-standing film comprising a blend of: e) a second film-forming polymer or oligomer; f) a second species comprising second unsaturated free-radically polymerizable groups, which may be e) or may be a species other than e); and g) a reducing agent which is not e) or f) and which does not comprise a transition metal, nitrogen or sulfur. In some embodiments, f) is e). In some embodiments, f) is a species other than e), and e) does not comprise unsaturated free-radically polymerizable groups. In some embodiments, the curable adhesive free-standing film comprises an outer surface bearing embossed air bleed channels capable of aiding in escape of air during application of the outer surface to a substrate. Additional embodiments of this curable adhesive free-standing film of the present disclosure are described below under "Selected Embodiments" and demonstrated in the Examples.

In another aspect, the present disclosure **discloses** an adhesive system comprising: I) a primer according to the present disclosure; and II) a curable adhesive free-standing film according to the present disclosure. Additional embodiments of this adhesive system of the present disclosure are described below under "Selected Embodiments" and demonstrated in the Examples.

In another aspect, the present disclosure **discloses** a primer for adhesion of a curable adhesive free-standing film to a first substrate comprising a blend of: a) a first film-forming polymer or oligomer; b) a species comprising first unsaturated free-radically polymerizable groups, which may be a) or may be a species other than a); and c) an oxidizing agent which is not a) or b); wherein the primer comprises no tackifier and wherein the primer is a liquid at normal temperature and pressure. In some embodiments, b) is a). In some embodiments, b) is a species other than a) and a) does not comprise unsaturated free-radically polymerizable groups. Additional embodiments of this primer of the present disclosure are described below under "Selected Embodiments" and demonstrated in the Examples.

In another aspect, the present disclosure provides an adhesive system comprising: I) a curable adhesive free-standing film comprising a blend of: a) a first film-forming polymer or oligomer; b) a first species comprising first unsaturated free-radically polymerizable groups, which may be a) or a species other than a); and c) a first transition metal cation; and II) a primer for adhesion of a curable adhesive free-standing film to a first substrate comprising: d) an oxidizing agent; wherein the primer is a liquid at normal temperature and pressure. In some embodiments, b) is a). In some embodiments, b) is a species other than a) and a) does not comprise unsaturated free-radically polymerizable groups. In some embodiments, the primer comprises no tackifier. In some embodiments, the primer comprises no species comprising unsaturated free-radically polymerizable groups. In some embodiments, the curable adhesive free-standing film additionally comprises a reducing agent selected from organic reducing agents. In some embodiments, the curable adhesive free-standing film comprises an outer surface bearing embossed air bleed channels capable of aiding in escape of air during application of the outer surface to a substrate. Additional embodiments of this adhesive system of the present disclosure are described below under "Selected Embodiments" and demonstrated in the Examples.

In another aspect, the present disclosure **discloses** an adhesive system comprising: I) a curable adhesive free-standing film comprising an outer surface bearing embossed air bleed channels capable of aiding in escape of air during application of the outer surface to a primed substrate; and II) a primer for adhesion of the curable adhesive free-standing film to a substrate, wherein the primer comprises components that initiate cure of the curable adhesive free-standing film. Additional embodiments of this adhesive system of the present disclosure are described below under "Selected Embodiments" and demonstrated in the Examples.

The preceding summary of the present disclosure is not intended to describe each embodiment of the present invention. The details of one or more embodiments of the invention are also set forth in the description below. Other features, objects, and advantages of the invention will be apparent from the description and from the claims.

In this application:
"directly bound" refers to two materials that are in direct contact with each other and bound together;
"film-forming" means capable of forming a continuous and coherent film, which in some embodiments may result from one or more of solidification, curing, drying, or solvent removal of a melt, solution, suspension, or the like;
"free-standing film" means a film that is solid at normal temperature and pressure and has mechanical integrity independent of contact with any supporting material (which excludes, *inter alia,* liquids, surface coatings dried or cured in situ such as paints or primers, and surface coatings without independent mechanical integrity);
"kDa" means kiloDaltons;
"(meth)acrylate" includes, separately and collectively, methacrylate and acrylate;
"monomer unit" of a polymer or oligomer is a segment of a polymer or oligomer derived from a single monomer;
"normal temperature and pressure" or "NTP" means a temperature of 20 °C (293.15 K, 68 °F) and an absolute pressure of 1 atm (14.696 psi, 101.325 kPa);
"pendent" functional groups of a polymer or oligomer are functional groups that do not form a part of the backbone of the polymer or oligomer and are not terminal groups of the polymer;
"room temperature" is 21 °C (70 °F); and
"structural adhesive" means an adhesive that binds by irreversible cure, typically with a strength when bound to its intended substrates, measured as stress at break (peak stress) using the overlap shear test described in the Examples herein, of at least 69 kPa (10 psi), more typically at least 276 kPa (40 psi), in some embodiments at least 689 kPa (100 psi), and in some embodiments at least 1379 kPa (200 psi).

All scientific and technical terms used herein have meanings commonly used in the art unless otherwise specified.

As used in this specification and the appended claims, terms such as "coated" and "embossed" are intended to represent structure, and not to limit the process used to obtain the recited structure.

As used in this specification and the appended claims, the singular forms "a", "an", and "the" encompass embodiments having plural referents, unless the content clearly dictates otherwise.

As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to." It will be understood that the terms "consisting of" and "consisting essentially of" are subsumed in the term "comprising," and the like.

### Brief Description of the Drawing

FIG. 1 is a cross section of one embodiment of a construction according to the present disclosure.
FIG. 2 is a cross section of one embodiment of a construction according to the present disclosure.
FIG. 3 is a cross section of one embodiment of a construction according to the present disclosure.
FIG. 4 is a cross section of one embodiment of a construction according to the present disclosure.
FIG. 5 is a cross section of one embodiment of a construction according to the present disclosure.
FIG. 6 is a cross section of one embodiment of a construction according to the present disclosure.
FIG. 7 is a cross section of one embodiment of a construction according to the present disclosure.
FIG. 8 is a cross section of one embodiment of a construction according to the present disclosure.
FIG. 9 is a cross section of one embodiment of a construction according to the present disclosure.
FIG. 10 is a cross section of one embodiment of a construction according to the present disclosure.

### Detailed Description

The present disclosure **discloses** curable adhesive films, **and provides tapes comprising such** films. The present disclosure also provides primers capable of initiating cure of the curable adhesive films. The present disclosure also **discloses** second curable films capable of initiating cure of the curable adhesive films. In some embodiments, the curable adhesive films are pressure sensitive adhesives before cure, capable of maintaining substrates in position even prior to cure, under shop or factory conditions, without clamps or other supports. The present adhesive system does not require mixing of liquid components for use. Upon contact with a primer-coated substrate, the curable adhesive films of the present disclosure begin to cure, resulting in structural adhesive bonds. In some embodiments of the present adhesive system, cure can be achieved at normal temperature and pressure, without heat or autoclave. Likewise, in some embodiments of the present adhesive system, cure can be achieved without UV or other radiation treatment, and cure propagates well to areas inaccessible to radiation cure. In some embodiments of the present adhesive system, components of the present adhesive system need not be refrigerated or kept in dark storage. In some embodiments of the present adhesive system, a curable adhesive film may be attached to its substrate at the point of manufacture and bonded at a different time and/or place. In some embodiments of the present adhesive system, a curable adhesive film may be attached to its substrate at the point of manufacture, a second curable film capable of initiating cure of the curable adhesive film may be attached to a second substrate at a second point of manufacture, and the two may be bonded at a third time and/or place. In some embodiments of the present adhesive system, a second curable film capable of initiating cure of the curable adhesive film may be attached to its substrate at the point of manufacture, another second curable film capable of initiating cure of the curable adhesive film may be attached to a second substrate at a second point of manufacture, and the two may be bonded at a third time and/or place by sandwiching a curable adhesive film between the two second curable films pre-mounted on the substrates.

The present disclosure **discloses** curable adhesive films. The curable adhesive films are room temperature solids. In some embodiments, the films comprise a blend of a reactive oligomer comprising unsaturated free-radically polymerizable groups, and a reducing agent. In some embodiments, the films comprise a blend of a reactive oligomer, comprising pendent, unsaturated free-radically polymerizable groups, and a reducing agent. In some embodiments, the films comprise a blend of a film-forming oligomer, a reactive species comprising unsaturated free-radically polymerizable groups, and a reducing agent. In some embodiments, the unsaturated free-radically polymerizable groups are selected from vinyl-containing groups such as (meth)acrylate groups. In some embodiments, the oligomer is a poly(meth)acrylate oligomer. In some embodiments the curable adhesive film additionally comprises a crosslinker comprising two or more or three or more unsaturated free-radically polymerizable groups, such as vinyl-containing groups, such as (meth)acrylate groups. In some embodiments, the crosslinker is a crosslinking monomer. In some embodiments, the crosslinker is an oligomer. In some embodiments the curable adhesive film additionally comprises a transition metal cation. In some embodiments the curable adhesive film additionally comprises a redox accelerator, such as a quaternary amine. In other embodiments the redox accelerator may be chosen from organic or inorganic chloride ion containing compounds such as amine hydrochlorides or sodium chloride. In some embodiments the curable adhesive film may additionally comprise fillers, such as solid or hollow particles comprising polymer, glass, ceramic, metal or metal oxide materials. Additional embodiments of the curable adhesive films of the present disclosure, tapes comprising same, and their use are provided in the figures and accompanying description, the Selected Embodiments, and the Examples.

Any suitable reducing agent may be used, including organic and inorganic components and mixtures thereof. Suitable reducing agents may include ascorbic acid components, tertiary amine components, sulfinate components, sulphite components, borane components, (thio)urea components, (thio)barbituric acid components, saccharin, reducing sugars such as dextrose, glucose, and fructose, and metal salts of any of the preceding. In some embodiments, the reducing agent comprises an ascorbic acid moiety. Such reducing agents may include salts or esters of ascorbic acid, or may be linked to an ascorbic acid moietiy by an ether linkage. Ketals or acetals may additionally be useful. Suitable salts may include alkali metal and earth alkali metal salts like Na, K, Ca and mixtures thereof. Esters of ascorbic acid may include those formed by reacting one or more of the hydroxyl functions of ascorbic acid with a carboxylic acid, in particular C2-C30 carboxylic acids or C12-C22 carboxylic acids. Suitable examples of C2 to C30 carboxylic acids include the fatty acids, like caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid and docosahexaenoic acid. In some embodiments, the reducing agent comprises an ascorbic acid moiety and can be easily dissolved in or mixed with the other components of the film, such as a reducing agent containing a hydrophobic moiety. In other embodiments, the reducing agent may be a tertiary amines such as N,N-dimethyl-p-toluidine, N,N-dimethyl¬aminoethyl methacrylate, triethanolamine, methyl 4-dimethylaminobenzoate, ethyl 4-dimethylaminobenzoate, methyldiphenylamine and isoamyl 4-dimethylaminobenzoate. In other embodiments, the reducing agent may be a sodium sulfinate derivative or an organometallic compound.

In some embodiments, the curable adhesive film has an outer surface, i.e., a substrate-facing surface, which includes embossed air bleed channels capable of aiding in escape of air during application of the outer surface to a substrate. The channels, and methods of their production, may be as taught in EP 1800865. Such channels fulfil a unique purpose in the use of the articles of the present disclosure. By allowing escape of trapped air bubbles, air bleed channels may help to improve contact with a primer or second film which initiates cure of the curable adhesive film. Where an adhesive film or tape has one embossed face and one that is not embossed, the non-embossed face may be placed on a first substrate and the second substrate may then be brought into contact with the embossed face. This approach may be particularly useful where two stiff substrates are to be joined, since it allows air bleed and adaptability to uneven surfaces despite the inflexibility of the substrates.

The present disclosure **discloses** primers capable of initiating cure of the curable adhesive films. In some embodiments, the primers comprise an oxidizing agent; and optionally a transition metal cation. In some embodiments, the primers comprise a reactive oligomer comprising unsaturated free-radically polymerizable groups, which may be the same or different from the reactive oligomer in the curable adhesive film; an oxidizing agent; and optionally a transition metal cation. In some embodiments, the primers comprise a reactive oligomer, comprising pendent, unsaturated free-radically polymerizable groups, which may be the same or different from the reactive oligomer in the curable adhesive film; an oxidizing agent; and optionally a transition metal cation. In some embodiments, the primers comprise a blend of a film-forming oligomer, a reactive species comprising unsaturated free-radically polymerizable groups, an oxidizing agent; and optionally a reducible transition metal cation. In some embodiments, the unsaturated free-radically polymerizable groups are selected from vinyl-containing groups such as (meth)acrylate groups. In some embodiments, the oxidizing agent comprises a peroxide group, such as a hydroperoxide group. In some embodiments, the transition metal cation is a cation of molybdenum, titanium, vanadium, chromium, manganese, iron, cobalt, nickel, copper or zinc. In some embodiments, the transition metal cation is a copper cation, such as Cu(II). In some embodiments, the transition metal cation is an iron cation, such as Fe(II) or Fe(III), such as may be found in Black 11 (Fe₃O₄ or FeO · Fe₂O₃), Red 102 (Fe₂O₃), or Yellow 42 (FeO(OH)·H₂O). In some embodiments, the primer additionally comprises a crosslinker comprising two or more or three or more unsaturated free-radically polymerizable groups, such as vinyl-containing groups, such as (meth)acrylate groups, which may be the same or different from the crosslinker in the curable adhesive film. In some embodiments, the crosslinker is a crosslinking monomer. In some embodiments, the crosslinker is an oligomer. In some embodiments, the primer may additionally contain excipients to facilitate transport of oxidizing agents. In some embodiments, common plasticizers may be used as excipients. In some embodiments, plasticizers such as low vapor pressure (at room temperature) plasticizers and/or high boiling point plasticizers may be used. In some embodiments the primer may additionally comprise fillers, such as solid or hollow particles comprising polymer, glass, ceramic, metal or metal oxide materials. The primer is typically applied as a solvent-borne liquid, by any suitable method, which may include brushing, spraying, dipping, and the like. Additional embodiments of the primers of the present disclosure and their use are provided in the figures and accompanying description, the Selected Embodiments, and the Examples.

The present disclosure **discloses** second curable films capable of initiating cure of the curable adhesive films. In some embodiments, the second curable films comprise an oxidizing agent; and optionally a transition metal cation. In some embodiments, the second curable films comprise a reactive oligomer comprising unsaturated free-radically polymerizable groups, which may be the same or different from the reactive oligomer in the curable adhesive film; an oxidizing agent; and optionally a transition metal cation. In some embodiments, the second curable films comprise a reactive oligomer, comprising pendent, unsaturated free-radically polymerizable groups, which may be the same or different from the reactive oligomer in the curable adhesive film; an oxidizing agent; and optionally a transition metal cation. In some embodiments, the second curable films comprise a blend of a film-forming oligomer, a reactive species comprising unsaturated free-radically polymerizable groups, an oxidizing agent; and optionally a reducible transition metal cation. In some embodiments, the unsaturated free-radically polymerizable groups are selected from vinyl-containing groups such as (meth)acrylate groups. In some embodiments, the oxidizing agent comprises a peroxide group, such as a hydroperoxide group. In some embodiments, the transition metal cation is a cation of molybdenum, titanium, vanadium, chromium, manganese, iron, cobalt, nickel, copper or zinc. In some embodiments, the transition metal cation is a copper cation, such as Cu(II). In some embodiments, the transition metal cation is an iron cation, such as Fe(II) or Fe(III), such as may be found in Black 11 (Fe₃O₄ or FeO · Fe₂O₃), Red 102 (Fe₂O₃), or Yellow 42 (FeO(OH)·H₂O). In some embodiments, the second curable films additionally comprises a crosslinker comprising two or more or three or more unsaturated free-radically polymerizable groups, such as vinyl-containing groups, such as (meth)acrylate groups, which may be the same or different from the crosslinker in the curable adhesive film. In some embodiments, the crosslinker is a crosslinking monomer. In some embodiments, the crosslinker is an oligomer. In some embodiments, the second curable films may additionally contain excipients to facilitate transport of oxidizing agents. In some embodiments, common plasticizers may be used as excipients. In some embodiments, plasticizers such as low vapor pressure (at room temperature) plasticizers and/or high boiling point plasticizers may be used. In some embodiments the primer may additionally comprise fillers, such as solid or hollow particles comprising polymer, glass, ceramic, metal or metal oxide materials. Additional embodiments of the second curable films of the present disclosure and their use are provided in the figures and accompanying description, the Selected Embodiments, and the Examples.

Any suitable oxidizing agents may be used. Suitable oxidizing agents may include organic peroxides, inorganic peroxides or persulfates. Suitable organic peroxides may include hydroperoxides, ketone peroxides, diacyl peroxides, dialkyl peroxides, peroxyketals, peroxyesters and peroxydicarbonates. Suitable organic peroxides may include di-peroxides, which may include di-peroxides comprising the moiety R1-O-O-R2-O-O-R3, with R1 and R3 being independently selected from H, alkyl (e.g. C1 to C6), branched alkyl (e.g. C1 to C6), cycloalkyl (e.g. C5 to C10), alkylaryl (e.g. C7 to C12) or aryl (e.g. C6 to C10) and R2 being selected from alkyl (e.g. (C1 to C6) or branched alkyl (e.g. C1 to C6). Suitable ketone peroxides may include methyl ethyl ketone peroxide, methyl isobutyl ketone peroxide, methyl cyclohexanone peroxide, and cyclohexanone peroxide. Suitable peroxyesters may include alpha-cumylperoxyneodecanoate, t-butyl peroxypivarate, t-butyl peroxyneodecanoate, 2,2,4-trimethylpentylperoxy-2-ethyl hexanoate, t-amylperoxy-2-ethyl hexanoate, t-butylperoxy-2-ethyl hexanoate, di-t-butylperoxy isophthalate, di-t-butyl peroxy hexahydroterephthalate, t-butylperoxy-3,3,5-trimethylhexanoate, t-butylperoxy acetate, t-butylperoxy benzoate and t-butylperoxymaleic acid. Suitable peroxidicarbonates may include di-3-methoxy peroxidicarbonate, di-2-ethylhexyl peroxy-dicarbonate, bis(4-t-butylcyclohexyl)peroxidicarbonate, diisopropyl-1-peroxydicarbonate, di-n-propyl peroxidicarbonate, di-2-ethoxyethyl-peroxidicarbonate, and diallyl peroxidicarbonate. Suitable diacyl peroxides may include acetyl peroxide, benzoyl peroxide, decanoyl peroxide, 3,3,5-trimethylhexanoyl peroxide, 2,4-dichlorobenzoyl peroxide and lauroylperoxide. Suitable dialkyl peroxides may include di-t-butyl peroxide, dicumylperoxide, t-butylcumyl peroxide, 2,5-dimethyl-2,5-di(t-butylperpoxy)hexane, 1,3-bis(t-butylperoxyisopropyl)benzene and 2,5-dimethyl-2,5-di(t-butylperoxy)-3-hexane. Suitable peroxyketals may include 1,1-bis(t-butylperoxy)-3,3,5-trimethylcyclohexane, 1,1-bis(t-butylperoxy)cyclohexane, 2,2-bis(t-butylperoxy)butane, 2,2-bis(t-butylperoxy)octane and 4,4-bis(t-butylperoxy)valeric acid-n-butylester. In some embodiments, the organic peroxide is a hydroperoxide, in particular a hydroperoxide comprising the structural moiety R-O-O-H with R being (e.g. C1 to C20) alkyl, (e.g. C3 to C20) branched alkyl, (e.g. C6 to C12) cycloalkyl, (e.g. C7 to C20) alkylaryl or (e.g. C6 to C12) aryl. Suitable organic hydroperoxides may include t-butyl hydroperoxide, t-amyl hydroperoxide, p-diisopropylbenzene hydroperoxide, cumene hydroperoxide, pinane hydroperoxide, p-methane hydroperoxide and 1,1,3,3-tetramethylbutyl hydroperoxide. Suitable oxidizing agents may include peroxodisulfate components and/or peroxodiphosphate components. Suitable examples may include ammonium, sodium, and potassium peroxodisulfate components and/or peroxodiphosphate components Suitable organic peroxides may additionally include t-butyl peroxy ethylhexyl carbonate, t-butyl peroxy trimethylhexanoate, t-butyl peroxy ethylhexanoate, t-amyl peroxy ethylhexanoate, t-octyl peroxy ethylhexanoate, t-amyl peroxy ethylhexyl carbonate, t-butyl peroxy isopropyl carbonate, t-butyl peroxyneodecanoate, t-butyl peroxyisobutyrate, or t-butyl hydroperoxide.

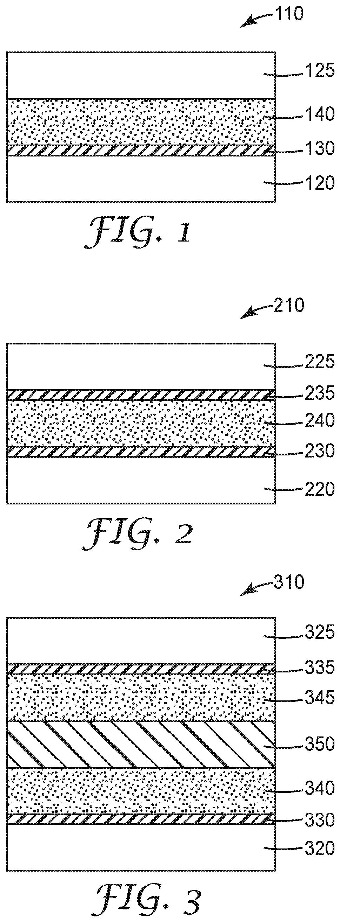

With reference to FIG. 1, in one embodiment, construction **110** comprises first substrate **120.** A primer according to the present disclosure is applied to first substrate **120** and allowed to dry to form primer layer **130** directly bound to first substrate **120.** A tape according to one embodiment of the present disclosure comprising a single layer of a curable adhesive film according to the present disclosure is applied to primer layer **130** and second substrate **125** is brought into contact with the tape. In some embodiments the assembly is held by external forces, i.e., a clamp, until the curable adhesive film becomes cured, however, in other embodiments the tackiness of the tape alone holds the assembly until cure. The tape cures to form cured structural adhesive layer **140** which is directly bound to primer layer **130** and second substrate **125.** Primer layer **130** becomes cured with cured structural adhesive layer **140.**

With reference to FIG. 2, in one embodiment, construction **210** comprises first substrate **220.** A primer according to the present disclosure is applied to first substrate **220** and allowed to dry to form first primer layer **230** directly bound to first substrate **220.** A primer according to the present disclosure is applied to second substrate **225** and allowed to dry to form second primer layer **235** directly bound to second substrate **225.** A tape according to one embodiment of the present disclosure comprising a single layer of a curable adhesive film according to the present disclosure is applied to first primer layer **230** and second primer layer **235** borne on second substrate **225** is brought into contact with the tape. In some embodiments the assembly is held by external forces, i.e., a clamp, until the curable adhesive film becomes cured, however, in other embodiments the tackiness of the tape alone holds the assembly until cure. The tape cures to form cured structural adhesive layer **240** which is directly bound to first primer layer **230** and second primer layer **235.** First and second primer layers **230, 235** become cured with cured structural adhesive layer **240.**

With reference to FIG. 3, in one embodiment, construction **310** comprises first substrate **320.** A primer according to the present disclosure is applied to first substrate **320** and allowed to dry to form first primer layer **330** directly bound to first substrate **320.** A primer according to the present disclosure is applied to second substrate **325** and allowed to dry to form second primer layer **335** directly bound to second substrate **325.** This embodiment employs a tape according to one embodiment of the present disclosure, comprising two layers of a curable adhesive film according to the present disclosure borne on opposite faces of support layer **350.** The tape is applied to first primer layer **330** and second primer layer **335** borne on second substrate **325** is brought into contact with the tape. In some embodiments the assembly is held by external forces, i.e., a clamp, until the curable adhesive film becomes cured, however, in other embodiments the tackiness of the tape alone holds the assembly until cure. The tape cures to form first and second cured structural adhesive layers **340, 345** which are directly bound to first primer layer **330** and second primer layer **335,** respectively. First primer layer **330** becomes cured with first cured structural adhesive layer **340.** Second primer layer **335** becomes cured with second cured structural adhesive layer **345.** In some embodiments of such a tape, one or both layers of curable adhesive film are bound directly to support layer **350.** In some embodiments of such a tape, one or both layers of curable adhesive film are bound to support layer 350 through secondary primer layers or other intervening layers (not shown). In this embodiment, structural adhesive layers **340, 345** cure independently of each other, and therefore in some embodiments attachment to first substrate **320** and attachment to second substrate **325** may be separated in time or place or performed in any order.

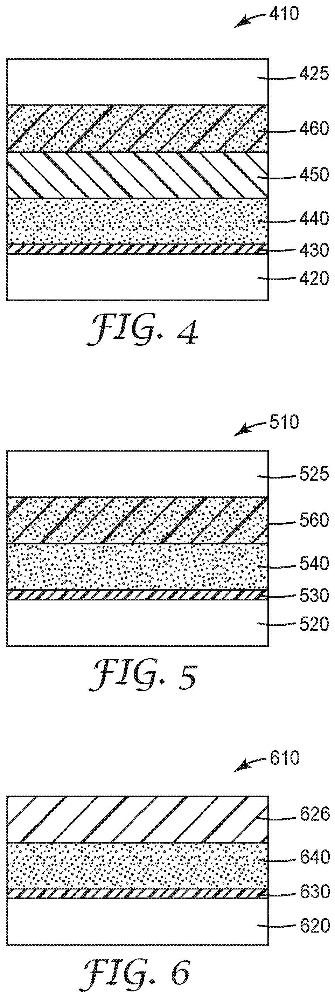

With reference to FIG. 4, in one embodiment, construction **410** comprises first substrate **420.** A primer according to the present disclosure is applied to first substrate **420** and allowed to dry to form first primer layer **430** directly bound to first substrate **420.** This embodiment employs a tape according to one embodiment of the present disclosure, comprising a layer of a curable adhesive film according to the present disclosure borne on support layer **450** and also comprising a secondary adhesive layer **460** borne on the opposite face of support layer **450.** The tape is applied to first primer layer **430** with the layer of a curable adhesive film according to the present disclosure contacting first primer layer **430.** Secondary adhesive layer **460** may be of any suitable type of adhesive, which may include a pressure sensitive adhesive, a heat-cure adhesive, a radiation cure adhesive, and the like. Second substrate **425** is brought into contact with secondary adhesive layer **460.** In some embodiments the assembly is held by external forces, i.e., a clamp, until the curable adhesive film becomes cured, however, in other embodiments the tackiness of the tape alone holds the assembly until cure. Optionally, additional steps may be taken to cure secondary adhesive layer **460.** The layer of curable adhesive film according to the present disclosure cures to form cured structural adhesive layer **440** which is directly bound to first primer layer **430.** First primer layer **430** becomes cured with cured structural adhesive layer **440.** In some embodiments of such a tape, one or both of the curable adhesive film and the secondary adhesive are bound directly to support layer **450.** In some embodiments of such a tape, one or both of the curable adhesive film and the secondary adhesive are bound to support layer **450** through secondary primer layers or other intervening layers (not shown). In this embodiment, attachment of structural adhesive layer **440** and secondary adhesive layer **460** are independent of each other, and therefore in some embodiments attachment to first substrate **420** and attachment to second substrate **425** may be separated in time or place or performed in any order.

With reference to FIGS. 3 and 4, support layers **350, 450** may be of any suitable material. In some embodiments, support layers **350, 450** are foams, which may include closed cell, open cell, syntactic, or non-syntactic foams. In some embodiments, support layers **350, 450** are not foams. In some embodiments, support layers **350, 450** comprise materials such as metals, polyolefins, polyethylenes, polypropylenes, polystyrenes, poly(meth)acrylates, polyurethanes, natural or synthetic rubbers, polydienes, and the like. Support layers **350, 450** may comprise various fillers, including tougheners, core-shell particles, solid or hollow microspheres of polymer, glass, ceramic, or metal oxide, fibers, electrically or thermally conductive materials, dyes or colorants, plasticisers, tackifiers, UV stabilizers, and the like.

With reference to FIGS. 3 and 4, optional secondary primers (not shown) may be of any suitable material that aids adhesion to support layer **350, 450.** Typically secondary primer materials do not include the primer according to the present disclosure. In some embodiments where a secondary primer layer is used, support layer **350, 450** is bound to an adhesive layer through the secondary primer layer; i.e., support layer **350, 450** is directly bound to the secondary primer layer (not shown) and the secondary primer layer is directly bound to the cured structural adhesive layer **340, 345, 440** or secondary adhesive layer **460.**

With reference to FIG. 5, in one embodiment, construction **510** comprises first substrate **520.** A primer according to the present disclosure is applied to first substrate **520** and allowed to dry to form first primer layer **530** directly bound to first substrate **520.** This embodiment employs a tape according to one embodiment of the present disclosure, comprising a layer of a curable adhesive film according to the present disclosure directly bound to a secondary adhesive layer **560.** The tape is applied to first primer layer 530 with the layer of curable adhesive film according to the present disclosure contacting first primer layer **530.** Secondary adhesive layer **560** may be of any suitable type of adhesive, which may include a pressure sensitive adhesive, a heat-cure adhesive, a radiation cure adhesive, and the like. Second substrate **525** is brought into contact with secondary adhesive layer **560.** In some embodiments the assembly is held by external forces, i.e., a clamp, until the curable adhesive film becomes cured, however, in other embodiments the tackiness of the tape alone holds the assembly until cure. Optionally, additional steps may be taken to cure secondary adhesive layer **560.** The layer of curable adhesive film according to the present disclosure cures to form cured structural adhesive layer **540** which is directly bound to first primer layer **530.** First primer layer **530** becomes cured with cured structural adhesive layer **540.** In this embodiment, attachment of structural adhesive layer **540** and secondary adhesive layer **560** are independent of each other, and therefore in some embodiments attachment to first substrate **520** and attachment to second substrate **525** may be separated in time or place or performed in any order.

With reference to FIG. 6, in one embodiment, construction **610** comprises first substrate **620.** A primer according to the present disclosure is applied to first substrate **620** and allowed to dry to form first primer layer **630** directly bound to first substrate **620.** A tape according to one embodiment of the present disclosure, comprising a layer of a curable adhesive film according to the present disclosure borne on a surfacing layer **626,** is applied to first primer layer **630** with the layer of curable adhesive film according to the present disclosure contacting first primer layer **630.** Surfacing layer **626** may be of any suitable material, which may include polymers, foils, protective layers, graphic layers, and the like; and which may include materials that are clear, opaque, mirrored, white, black, colored, patterned, imaged and/or textured. In some embodiments of such a tape, the curable adhesive film and surfacing layer **626** are directly bound together, whereas in other embodiments they may be bound through a primer layer or other intervening layers (not shown). In some embodiments the assembly is held by external forces, i.e., a clamp, until the curable adhesive film becomes cured, however, in other embodiments the tackiness of the tape alone holds the assembly until cure. The layer of curable adhesive film according to the present disclosure cures to form cured structural adhesive layer **640** which is directly bound to first primer layer **630.** First primer layer **630** becomes cured with cured structural adhesive layer **640.**

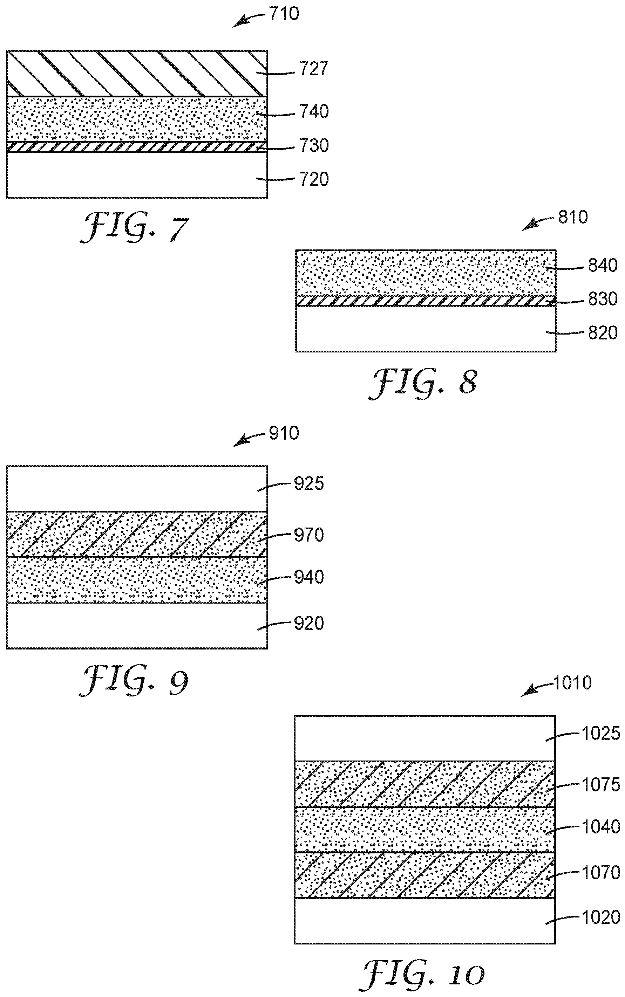

With reference to FIGS. 7 and 8, in one embodiment, construction **710, 810** comprises first substrate **720, 820.** A primer according to the present disclosure is applied to first substrate **720, 820** and allowed to dry to form first primer layer **730, 830** directly bound to first substrate **720, 820.** A tape according to one embodiment of the present disclosure, comprising a layer of a curable adhesive film according to the present disclosure borne on a removable release liner **727,** is applied to first primer layer **730, 830** with the layer of curable adhesive film according to the present disclosure contacting first primer layer **730, 830.** Removable release liner **727** may be of any suitable material that may be removed from the layer of a curable adhesive film according to the present disclosure after it cures to form cured structural adhesive layer **740, 840.** The layer of curable adhesive film according to the present disclosure cures to form cured structural adhesive layer **740, 840** which is directly bound to first primer layer **730, 830.** First primer layer **730, 830** becomes cured with cured structural adhesive layer **740, 840.** Since cure of the layer of curable adhesive film according to the present disclosure is inhibited by oxygen, removable release liner **727** is preferably left in place until cure is complete. After cure, removable release liner **727** may be removed. In these embodiments, cured structural adhesive layer **740, 840** may be used as a protective layer covering part or all of first substrate **720, 820.**

With reference to FIG. 9, in one embodiment, construction **910** comprises first substrate **920** and second substrate **925.** A curable adhesive film according to the present disclosure is applied to first substrate **920,** a second curable film capable of initiating cure of the curable adhesive film is applied to second substrate **925,** and the two substrates are brought together so as to bring the films in contact. The curable adhesive film cures to form cured structural adhesive layer **940** which is directly bound to first substrate layer **920** and the second curable film capable of initiating cure of the curable adhesive film also cures, to form cured structural adhesive layer **970** which is directly bound to second substrate layer **925.** Such embodiments may enable manufacturing ease and flexibility. In some such embodiments, the curable adhesive film may be attached to substrate **920** at the point of manufacture, the second curable film capable of initiating cure of the curable adhesive film may be attached to second substrate **925** at a second point of manufacture, and the two may be bonded at a third time and/or place. However, the layers may also be attached in any suitable order. The curable adhesive film and the second curable film capable of initiating cure of the curable adhesive film are typically pressure sensitive adhesives prior to cure. Typically, cure may occur without application of heat or pressure beyond normal temperature and pressure.

With reference to FIG. 10, in one embodiment, construction **1010** comprises first substrate **1020** and second substrate **1025.** Second curable films capable of initiating cure of the curable adhesive film are applied to each of first substrate **1020** and second substrate **1025.** The two substrates are brought together with a curable adhesive film according to the present disclosure so as to bring the second curable films capable of initiating cure in contact with opposite faces of the curable adhesive film. The curable adhesive film cures to form cured structural adhesive layer **1040** and the second curable films capable of initiating cure also cure, to form cured structural adhesive layers **1070, 1075** which are directly bound to first substrate layer **1020** and second substrate layer **1025.** Adhesive layers **1070, 1075** are directly bound to opposite faces of adhesive layer **1040.** Such embodiments may enable manufacturing ease and flexibility. In some such embodiments, the second curable adhesive films may be attached to substrates **1020, 1025** at their points of manufacture, and the two may be bonded with a curable adhesive film at a third time and/or place. However, the layers may also be attached in any suitable order. The curable adhesive film and the second curable film capable of initiating cure of the curable adhesive film are typically pressure sensitive adhesives prior to cure. Typically, cure may occur without application of heat or pressure beyond normal temperature and pressure.

With reference to FIGS. 1-10, substrate layers **120, 220, 320, 420, 520, 620, 720, 820, 920, 1020** and second substrates **125, 225, 325, 425, 525, 925, 1025** may be of any suitable material, each chosen independently. Suitable materials may include metals such as aluminum, titanium, steel, and the like. Suitable materials may include polymeric materials, such as polyolefins, polyethylenes, polypropylenes, polystyrenes, poly(meth)acrylates, polyurethanes, natural or synthetic rubbers, polydienes, and the like. Suitable materials may include natural materials, such as wood, stone, and the like; or derivatives such as composite board or concrete, and the like. Suitable materials may include glass or ceramic materials.

With reference to FIGS. 1-8, primer layers **130, 230, 235, 330, 335, 430, 530, 630, 730, 830** may be of any suitable thickness. In some embodiments, thickness is at least 5 micrometers, more typically at least 10 micrometers, more typically at least 20 micrometers, more typically at least 40 micrometers, more typically at least 60 micrometers, more typically at least 80 micrometers, and more typically at least 100 micrometers. In some embodiments, thickness is not more than 200 micrometers and more typically not more than 160 micrometers.

With reference to FIGS. 1-10, cured adhesive layers **140, 240, 340, 345, 440, 540, 640, 740, 840, 940, 970, 1040, 1070, 1075** may be of any suitable thickness. In some embodiments, thickness is at least 20 micrometers, more typically at least 45 micrometers, more typically at least 100 micrometers, more typically at least 200 micrometers, more typically at least 250 micrometers, more typically at least 300 micrometers, and more typically at least 350 micrometers. In some embodiments, thickness is not more than 2000 micrometers, more typically not more than 1000 micrometers, and more typically not more than 500 micrometers.

Additional embodiments are recited in the Selected Embodiments and Examples below.

### Selected Embodiments

The following embodiments, designated by letter and number, are intended to further illustrate the present disclosure.

PSP1. An adhesive system comprising:
I) a curable adhesive free-standing film comprising a blend of:
   a) a first film-forming polymer or oligomer;
   b) a first species comprising first unsaturated free-radically polymerizable groups, which may be a) or a species other than a); and
   c) a first transition metal cation; and
II) a primer for adhesion of a curable adhesive free-standing film to a first substrate comprising:
   d) an oxidizing agent; and
wherein the primer is a liquid at normal temperature and pressure.

PSP2. The adhesive system according to embodiment PSP1 wherein the primer comprises no tackifier.

PSP3. The adhesive system according to embodiment PSP1 or PSP2 wherein the primer comprises no species comprising first unsaturated free-radically polymerizable groups.

PSP4. The adhesive system according to any of embodiments PSP1-PSP3 wherein the oxidizing agent is a peroxide.

PSP5. The adhesive system according to any of embodiments PSP1-PSP3 wherein the oxidizing agent comprises a hydroperoxide group.

PSP6. The adhesive system according to any of embodiments PSP1-PSP3 wherein the oxidizing agent is aromatic.

PSP7. The adhesive system according to any of embodiments PSP1-PSP3 wherein the oxidizing agent is cumene hydroperoxide.

PSP8. The adhesive system according to any of embodiments PSP1-PSP7 wherein the primer comprises at least 5 weight percent of the oxidizing agent.

PSP9. The adhesive system according to any of embodiments PSP1-PSP7 wherein the primer comprises at least 10 weight percent of the oxidizing agent.

PSP10. The adhesive system according to any of embodiments PSP1-PSP7 wherein the primer comprises at least 20 weight percent of the oxidizing agent.

PSP11. The adhesive system according to any of embodiments PSP1-PSP7 wherein the primer comprises at least 30 weight percent of the oxidizing agent.

PSP12. The adhesive system according to any of embodiments PSP1-PSP11 wherein the primer comprises not more than 50 weight percent of the oxidizing agent.

PSP13. The adhesive system according to any of embodiments PSP1-PSP11 wherein the primer comprises not more than 20 weight percent of the oxidizing agent.

PSPF1.The adhesive system according to embodiments PSP1-PSP13 wherein first unsaturated free-radically polymerizable groups are selected from vinyl-containing groups.

PSPF2.The adhesive system according to embodiments PSP1-PSP13 wherein first unsaturated free-radically polymerizable groups are selected from (meth)acrylate groups.

PSPF3.The adhesive system according to embodiments PSP1-PSP13 wherein first unsaturated free-radically polymerizable groups are selected from acrylate groups.

PSPF4.The adhesive system according to embodiments PSP1-PSP13 wherein first unsaturated free-radically polymerizable groups are selected from methacrylate groups.

PSPF5.The adhesive system according to any of embodiments PSP1-PSP13 or PSPF1-PSPF4 wherein f) is e) and the first unsaturated free-radically polymerizable groups are bound to the first film-forming polymer or oligomer through urethane linkages.

PSPF6.The adhesive system according to any of embodiments PSP1-PSP13 or PSPF1-PSPF5 wherein the first film-forming polymer or oligomer is a poly(meth)acrylate oligomer.

PSPF7.The adhesive system according to any of embodiments PSP1-PSP13 or PSPF1-PSPF6wherein the first film-forming polymer or oligomer is a random copolymeric oligomer.

PSPF8.The adhesive system according to any of embodiments PSP1-PSP13 or PSPF1-PSPF7wherein the first film-forming polymer or oligomer is not a block copolymeric oligomer.

PSPF9.The adhesive system according to any of embodiments PSP1-PSP13 or PSPF1-PSPF8 wherein greater than 60% of monomer units comprising the first film-forming polymer or oligomer are derived from (meth)acrylate monomers.

PSPF10. The adhesive system according to any of embodiments PSP1-PSP13 or PSPF1-PSPF8 wherein greater than 80% of monomer units comprising the first film-forming polymer or oligomer are derived from (meth)acrylate monomers.

PSPF11. The adhesive system according to any of embodiments PSP1-PSP13 or PSPF1-PSPF8 wherein greater than 90% of monomer units comprising the first film-forming polymer or oligomer are derived from (meth)acrylate monomers.

PSPF12. The adhesive system according to any of embodiments PSP1-PSP13 or PSPF1-PSPF11 wherein the first film-forming polymer or oligomer has a weight average molecular weight of greater than 3 kDa.

PSPF13. The adhesive system according to any of embodiments PSP1-PSP13 or PSPF1-PSPF11 wherein the first film-forming polymer or oligomer has a weight average molecular weight of greater than 30 kDa.

PSPF14. The adhesive system according to any of embodiments PSP1-PSP13 or PSPF1-PSPF11 wherein the first film-forming polymer or oligomer has a weight average molecular weight of greater than 100 kDa.

PSPF15. The adhesive system according to any of embodiments PSP1-PSP13 or PSPF1-PSPF11 wherein the first film-forming polymer or oligomer has a weight average molecular weight of greater than 200 kDa.

PSPF16. The adhesive system according to any of embodiments PSP1-PSP13 or PSPF1-PSPF15 wherein the first film-forming polymer or oligomer has a weight average molecular weight of less than 1,000 kDa.

PSPF17. The adhesive system according to any of embodiments PSP1-PSP13 or PSPF1-PSPF15 wherein the first film-forming polymer or oligomer has a weight average molecular weight of less than 600 kDa.

PSPF18. The adhesive system according to any of embodiments PSP1-PSP13 or PSPF1-PSPF15 wherein the first film-forming polymer or oligomer has a weight average molecular weight of less than 400 kDa.

PSPF19. The adhesive system according to any of embodiments PSP1-PSP13 or PSPF1-PSPF18 wherein b) is a) and the first film-forming polymer or oligomer comprises the first unsaturated free-radically polymerizable groups in an amount of 10 or more per molecule.

PSPF20. The adhesive system according to any of embodiments PSP1-PSP13 or PSPF1-PSPF18 wherein b) is a) and the first film-forming polymer or oligomer comprises the first unsaturated free-radically polymerizable groups in an amount of 20 or more per molecule.

PSPF21. The adhesive system according to any of embodiments PSP1-PSP13 or PSPF1-PSPF18 wherein b) is a) and the first film-forming polymer or oligomer comprises the first unsaturated free-radically polymerizable groups in an amount of 40 or more per molecule.

PSPF22. The adhesive system according to any of embodiments PSP1-PSP13 or PSPF1-PSPF21 wherein the first film-forming polymer or oligomer additionally comprises pendent amide groups.

PSPF23. The adhesive system according to any of embodiments PSP1-PSP13 or PSPF1-PSPF22 wherein the curable adhesive free-standing film comprises at least 50 weight percent of the first film-forming polymer or oligomer.

PSPF24. The adhesive system according to any of embodiments PSP1-PSP13 or PSPF1-PSPF22 wherein the curable adhesive free-standing film comprises at least 60 weight percent of the first film-forming polymer or oligomer.

PSPF25. The adhesive system according to any of embodiments PSP1-PSP13 or PSPF1-PSPF22 wherein the curable adhesive free-standing film comprises at least 65 weight percent of the first film-forming polymer or oligomer.

PSPF26. The adhesive system according to any of embodiments PSP1-PSP13 or PSPF1-PSPF22 wherein the curable adhesive free-standing film comprises at least 70 weight percent of the first film-forming polymer or oligomer.

PSPF27. The adhesive system according to any of embodiments PSP1-PSP13 or PSPF1-PSPF26 wherein the curable adhesive free-standing film comprises not more than 90 weight percent of the first film-forming polymer or oligomer.

PSPF28. The adhesive system according to any of embodiments PSP1-PSP13 or PSPF1-PSPF26 wherein the curable adhesive free-standing film comprises not more than 80 weight percent of the first film-forming polymer or oligomer.

PSPF29. The adhesive system according to any of embodiments PSP1-PSP13 or PSPF1-PSPF28 wherein b) is a).

PSPF30. The adhesive system according to any of embodiments PSP1-PSP13 or PSPF1-PSPF28 wherein b) is a) and the first unsaturated free-radically polymerizable groups are pendent groups of the first film-forming polymer or oligomer.

PSPFA1. The adhesive system according to any of embodiments PSP1-PSP13 or PSPF1-PSPF30 wherein the curable adhesive free-standing film additionally comprises a reducing agent selected from organic reducing agents.

PSPFA2. The adhesive system according to any of embodiments PSP1-PSP13 or PSPF1-PSPF30 wherein the curable adhesive free-standing film additionally comprises a reducing agent selected from the group consisting of ascorbic acid and derivatives thereof.

PSPFA3. The adhesive system according to any of embodiments PSP1-PSP13 or PSPF1-PSPF30 wherein the curable adhesive free-standing film additionally comprises a reducing agent selected from the group consisting of ascorbyl esters.

PSPFA4. The adhesive system according to any of embodiments PSP1-PSP13 or PSPF1-PSPF30 wherein the curable adhesive free-standing film additionally comprises a reducing agent selected from the group consisting of ascorbyl esters of fatty acids.

PSPFA5. The adhesive system according to any of embodiments PSP1-PSP13 or PSPF1-PSPF30 wherein the curable adhesive free-standing film additionally comprises a reducing agent selected from the group consisting of ascorbyl esters of C12-C22 fatty acids.

PSPFA6. The adhesive system according to any of embodiments PSP1-PSP13 or PSPF1-PSPF30 wherein the curable adhesive free-standing film additionally comprises ascorbyl palmitate.

PSPFB1. The adhesive system according to any of embodiments PSP1-PSP13, PSPF1-PSPF30 or PSPFA1-PSPFA6 wherein the curable adhesive free-standing film additionally comprises a first crosslinker comprising two or more fourth unsaturated free-radically polymerizable groups.

PSPFB2. The adhesive system according to embodiment PSPFB1 wherein the first crosslinker comprises three or more fourth unsaturated free-radically polymerizable groups.

PSPFB3. The adhesive system according to any of embodiments PSPFB1-PSPFB2 wherein the fourth unsaturated free-radically polymerizable groups are selected from vinyl-containing groups.

PSPFB4. The adhesive system according to any of embodiments PSPFB1-PSPFB2 wherein the fourth unsaturated free-radically polymerizable groups are selected from (meth)acrylate groups.

PSPFB5. The adhesive system according to any of embodiments PSPFB1-PSPFB2 wherein the fourth unsaturated free-radically polymerizable groups are selected from acrylate groups.

PSPFB6. The adhesive system according to any of embodiments PSPFB1-PSPFB2 wherein the fourth unsaturated free-radically polymerizable groups are selected from methacrylate groups.

PSPFB7. The adhesive system according to any of embodiments PSPFB1-PSPFB6 wherein the curable adhesive free-standing film comprises at least 5 weight percent of the first crosslinker.

PSPFB8. The adhesive system according to any of embodiments PSPFB1-PSPFB6 wherein the curable adhesive free-standing film comprises at least 10 weight percent of the first crosslinker.

PSPFB9. The adhesive system according to any of embodiments PSPFB1-PSPFB6 wherein the curable adhesive free-standing film comprises at least 15 weight percent of the first crosslinker.

PSPFB10. The adhesive system according to any of embodiments PSPFB1-PSPFB9 wherein the curable adhesive free-standing film comprises not more than 30 weight percent of the first crosslinker.

PSPFB11. The adhesive system according to any of embodiments PSPFB1-PSPFB9 wherein the curable adhesive free-standing film comprises not more than 25 weight percent of the first crosslinker.

PSPFB12. The adhesive system according to any of embodiments PSPFB1-PSPFB9 wherein the curable adhesive free-standing film comprises not more than 20 weight percent of the first crosslinker.

PSPFC1. The adhesive system according to any of embodiments PSP1-PSP13, PSPF1-PSPF30, PSPFA1-PSPFA6, or PSPFB1-PSPFB12 wherein the curable adhesive free-standing film additionally comprising a redox accelerator.

PSPFC2. The adhesive system according to embodiment PSPFC1 wherein the redox accelerator comprises a quaternary amine.

PSPFC3. The adhesive system according to any of embodiments PSP1-PSP13, PSPF1-PSPF30, PSPFA1-PSPFA6, PSPFB1-PSPFB12, or PSPFC1-PSPFC2 wherein the curable adhesive free-standing film is a pressure sensitive adhesive.

PSPFC4. The adhesive system according to any of embodiments PSP1-PSP13, PSPF1-PSPF30, PSPFA1-PSPFA6, PSPFB1-PSPFB12, or PSPFC1-PSPFC3 wherein the curable adhesive free-standing film has a tacky surface.

PSPFC5. The adhesive system according to any of embodiments PSP1-PSP13, PSPF1-PSPF30, PSPFA1-PSPFA6, PSPFB1-PSPFB12, or PSPFC1-PSPFC4 wherein the curable adhesive free-standing film additionally comprises solid or hollow particles comprising polymer, glass, ceramic, metal or metal oxide materials.

PSPFC6. The adhesive system according to any of embodiments PSP1-PSP13, PSPF1-PSPF30, PSPFA1-PSPFA6, PSPFB1-PSPFB12, or PSPFC1-PSPFC5 wherein the curable adhesive free-standing film comprises an outer surface bearing embossed air bleed channels capable of aiding in escape of air during application of the outer surface to a substrate.

PSPFC7. The adhesive system according to any of embodiments PSP1-PSP13, PSPF1-PSPF30, PSPFA1-PSPFA6, PSPFB1-PSPFB12, or PSPFC1-PSPFC6 wherein b) is a species other than a), wherein a) does not comprise unsaturated free-radically polymerizable groups.

PSPFC8. The adhesive system according to embodiment PSPFC7 wherein a) is selected from the group consisting of acrylic polymers, rubber polymers, polyester polymers, polyurethane polymers, polyamide polymers, and combinations thereof.

PSPFC9. The adhesive system according to any of embodiments PSP1-PSP13, PSPF1-PSPF30, PSPFA1-PSPFA6, PSPFB1-PSPFB12, or PSPFC1-PSPFC8 wherein the transition metal cation is a cation of molybdenum, titanium, vanadium, chromium, manganese, iron, cobalt, nickel, copper or zinc.

PSPFC10. The adhesive system according to any of embodiments PSP1-PSP13, PSPF1-PSPF30, PSPFA1-PSPFA6, PSPFB1-PSPFB12, or PSPFC1-PSPFC8 wherein the transition metal cation is an iron cation.

PSPFC11. The adhesive system according to any of embodiments PSP1-PSP13, PSPF1-PSPF30, PSPFA1-PSPFA6, PSPFB1-PSPFB12, or PSPFC1-PSPFC8 wherein the transition metal cation is Fe(II).

PSPFC12. The adhesive system according to any of embodiments PSP1-PSP13, PSPF1-PSPF30, PSPFA1-PSPFA6, PSPFB1-PSPFB12, or PSPFC1-PSPFC8 wherein the transition metal cation is Fe(III).

PSPFC13. The adhesive system according to any of embodiments PSP1-PSP13, PSPF1-PSPF30, PSPFA1-PSPFA6, PSPFB1-PSPFB12, or PSPFC1-PSPFC12 wherein I) and II) are packaged together.

PSPFC14. The adhesive system according to any of embodiments PSP1-PSP13, PSPF1-PSPF30, PSPFA1-PSPFA6, PSPFB1-PSPFB12, or PSPFC1-PSPFC12 wherein I) and II) are sold together.

PSPFC15. The adhesive system according to any of embodiments PSP1-PSP13, PSPF1-PSPF30, PSPFA1-PSPFA6, PSPFB1-PSPFB12, or PSPFC1-PSPFC14 wherein I) does not comprise an oxidizing agent that is not a), b), or c).

PSPFC16. The adhesive system according to any of embodiments PSP1-PSP13, PSPF1-PSPF30, PSPFA1-PSPFA6, PSPFB1-PSPFB12, or PSPFC1-PSPFC14 wherein I) does not comprise a peroxide.

PSPFC17. The adhesive system according to any of embodiments PSP1-PSP13, PSPF1-PSPF30, PSPFA1-PSPFA6, PSPFB1-PSPFB12, or PSPFC1-PSPFC16 wherein II) does not comprise a transition metal cation.

PSPFC18. The adhesive system according to any of embodiments PSP1-PSP13, PSPF1-PSPF30, PSPFA1-PSPFA6, PSPFB1-PSPFB12, or PSPFC1-PSPFC17 wherein II) does not comprise a species comprising unsaturated free-radically polymerizable groups.

PSPT1. The adhesive system according to any of embodiments PSP1-PSP13, PSPF1-PSPF30, PSPFA1-PSPFA6, PSPFB1-PSPFB12, or PSPFC1-PSPFC18 wherein the curable adhesive free-standing film is comprises in a tape.

PSPT2. The adhesive system according to embodiment PSPT1 wherein the tape additionally comprises a support layer borne on the curable adhesive free-standing film layer.

PSPT3. The adhesive system according to embodiment PSPT1 wherein the tape additionally comprises a support layer directly bound to the curable adhesive free-standing film layer.

PSPT4. The adhesive system according to embodiment PSPT1 wherein the tape additionally comprises a support layer bound to the curable adhesive free-standing film layer through a secondary primer layer.

PSPCA1. A construction comprising:
i) a cured primer layer obtained by cure of the primer according to any of embodiments PSP1-PSP13, PSPF1-PSPF30, PSPFA1-PSPFA6, PSPFB1-PSPFB12, PSPFC1-PSPFC18, or PSPT1-PSPT4 directly bound to
ii) a cured structural adhesive layer obtained by cure of the curable adhesive free-standing film according to any of embodiments PSP1-PSP13, PSPF1-PSPF30, PSPFA1-PSPFA6, PSPFB1-PSPFB12, PSPFC1-PSPFC18, or PSPT1-PSPT4.

PSPCA2. The construction according to embodiment PSPCA1 additionally comprising:
iii) a first substrate directly bound to the first cured primer layer.

PSPCA3. The construction according to embodiment PSPCA2 additionally comprising:
iv) a second cured primer layer obtained by cure of a primer according to any of embodiments PSP1-PSP13, PSPF1-PSPF30, PSPFA1-PSPFA6, PSPFB1-PSPFB12, PSPFC1-PSPFC18, or PSPT1-PSPT4 chosen independently of the first cured primer layer; wherein the second cured primer layer is directly bound to the first cured structural adhesive layer; and
v) a second substrate directly bound to the second cured primer layer.

PSPCA4. The construction according to embodiment PSPCA3 wherein the first cured primer layer and the second cured primer layer comprise the same material.

PSPCA5. The construction according to embodiment PSPCA3 wherein the first cured primer layer and the second cured primer layer comprise different materials.

PSPCA6. The construction according to embodiment PSPCA2 additionally comprising:
v) a second substrate directly bound to the first cured structural adhesive layer.

PSPCA7. The construction according to embodiment PSPCA2 additionally comprising:
vi) a surfacing layer borne on the first cured structural adhesive layer.

PSPCA8. The construction according to embodiment PSPCA2 additionally comprising:
vi) a surfacing layer directly bonded to the first cured structural adhesive layer.

PSPCA9. The construction according to embodiment PSPCA2 additionally comprising:
vii) a secondary adhesive layer borne on the first cured structural adhesive layer.

PSPCA10. The construction according to embodiment PSPCA2 additionally comprising:
vii) a secondary adhesive layer directly bonded to the first cured structural adhesive layer.

PSPCA11. The construction according to embodiment PSPCA9 or PSPCA10 additionally comprising:
v) a second substrate borne on the secondary adhesive layer.

PSPCA12. The construction according to embodiment PSPCA9 or PSPCA10 additionally comprising:
v) a second substrate directly bound to the secondary adhesive layer.

PSPCA13. The construction according to embodiment PSPCA2 additionally comprising:
viii) a support layer borne on the first cured structural adhesive layer.

PSPCA14. The construction according to embodiment PSPCA2 additionally comprising:
viii) a support layer directly bonded to the first cured structural adhesive layer.

PSPCA15. The construction according to embodiment PSPCA13 or PSPCA14 additionally comprising:
ix) a second cured structural adhesive layer obtained by cure of a curable adhesive free-standing film according to any of embodiments PSP1-PSP13, PSPF1-PSPF30, PSPFA1-PSPFA6, PSPFB1-PSPFB12, PSPFC1-PSPFC18, or PSPT1-PSPT4 chosen independently of the first cured structural adhesive layer; wherein the second cured structural adhesive layer is borne on the support layer.

PSPCA16. The construction according to embodiment PSPCA13 or PSPCA14 additionally comprising:
ix) a second cured structural adhesive layer obtained by cure of a curable adhesive free-standing film according to any of embodiments PSP1-PSP13, PSPF1-PSPF30, PSPFA1-PSPFA6, PSPFB1-PSPFB12, PSPFC1-PSPFC18, or PSPT1-PSPT4 chosen independently of the first cured structural adhesive layer; wherein the second cured structural adhesive layer is directly bound to the support layer.

PSPCA17. The construction according to embodiment PSPCA15 or PSPCA16 wherein the first cured structural adhesive layer and second cured structural adhesive layer comprise the same material.

PSPCA18. The construction according to embodiment PSPCA15 or PSPCA16 wherein the first cured structural adhesive layer and second cured structural adhesive layer comprise different material.

PSPCA19. The construction according to any of embodiments PSPCA15-PSPCA18 additionally comprising:
iv) a second cured primer layer obtained by cure of a primer according to any of embodiments PSP1-PSP13, PSPF1-PSPF30, PSPFA1-PSPFA6, PSPFB1-PSPFB12, PSPFC1-PSPFC18, or PSPT1-PSPT4 chosen independently of the first cured primer layer; wherein the second cured primer layer is directly bound to the second cured structural adhesive layer; and
v) a second substrate directly bound to the second cured primer layer.

PSPCA20. The construction according to embodiment PSPCA13 or PSPCA14 additionally comprising:
vii) a secondary adhesive layer borne on the support layer.

PSPCA21. The construction according to embodiment PSPCA13 or PSPCA14 additionally comprising:
vii) a secondary adhesive layer directly bound to the support layer.

PSPCA22. The construction according to embodiment PSPCA13 or PSPCA14 additionally comprising:
vii) a secondary adhesive layer bound to the support layer through a secondary primer layer.

PSPCA23. The construction according to any of embodiments PSPCA20-PSPCA21 additionally comprising:
v) a second substrate borne on the secondary adhesive layer.

PSPCA24. The construction according to any of embodiments PSPCA20-PSPCA21 additionally comprising:
v) a second substrate directly bound to the secondary adhesive layer.

PSPCA25. The construction according to any of embodiments PSPCA20-PSPCA21 additionally comprising:
v) a second substrate bound to the secondary adhesive layer through a secondary primer.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Aldrich Chemical Co., Milwaukee, WI, or may be synthesized by known methods.

### MATERIALS

| **Designation** | **Description** |
|---|---|
| Acrylic Polymer Solution | Solution of acrylic polymer made as described below |
| Polyester Polymer Solution | Solution of polyester polymer made as described below |
| 3550B | Vitel 3550B, an amorphous, linear, saturated copolyester laminating resin from Bostik, Wauwatosa, WI |
| MEK | Methyl ethyl ketone from Avantor Performance Materials, Center Valley, PA |
| Polyurethane Polymer Solution | Solution of polyurethane polymer made as described below |
| STEPANPOL PH-56 | Hydroxyl terminated polyester, OH value 57.3 mg KOH/g), available from Stepan Company, Northfield, IL |
| DMPA | Dimethylolpropionic acid, available from Sigma-Aldrich, St. Louis, MO |
| DESMODUR H | Aliphatic diisocyanate, available from Covestro, Pittsburgh, PA |
| DBTA | Dibutyltin diacetate, available from Sigma-Aldrich |
| Polyamide Polymer Solution | Solution of RK-29 made as described below |
| RK-29 | Polyamide polymer prepared as described below |
| Toluene | Toluene |
| IPA | Isopropyl alcohol |
| Reactive Polyester Polymer Solution | Solution of F-584 made as described below |
| F-584 | Reactive polyester polymer prepared as described below |
| TBAC STOCK | Solution made as described below |
| TBAC | Benzyltributylammonium chloride from Alfa Aesar, Ward Hill, MA |
| HEMA | Hydroxyethyl methacrylate from Dow Chemical Company, Midland, MI |
| EtOAc | Ethyl acetate from VWR International, Radnor, PA |
| CAS | 10wt% copper acetate solution in Glypho made as described below |
| Cu(OAc)₂ | Copper(II) acetate monohydrate from Alfa Aesar, Ward |
| | Hill, MA |
| Glypho | Esterification product of 2-hydroxypropane-1,3-diyl-bis(2-methylprop-2-enoate) and 3-hydroxypropane-1,2-diyl-bis(2-methylprop-2-enoate) and diphosphorus pentoxide as described in EP dossier public record, EC number: 700-757-3 |
| PRIPOL 1013 | Distilled dimer acid from Croda Inc, Gouda, Netherlands |
| piperazine | Piperazine from BASF Corporation, Ludwigshafen, Germany |
| 85% phosphoric acid | 85% phosphoric acid in water from Sigma-Aldrich, St. Louis, MO |
| Reactive Oligomer A | Solution of reactive oligomer made as described below |
| 2EHA | 2-ethylhexyl acrylate from BASF Corporation, Florham Park, NJ |
| CHA | Cyclohexyl acrylate from TCI America, Portland, OR |
| BA | n-Butyl acrylate from BASF Corporation, Florham Park, NJ |
| Acm | Acrylamide from Zibo Xinye Chemical Company, Zibo, China |
| HPA | Hydroxypropyl acrylate (mixture of isomers) from BASF Corporation, Florham Park, NJ |
| VAZO 52 | 2,2'-azobis(2,4-dimethyl-pentanenitrile) a thermal radical initiator from DuPont, Wilmington, DE |
| TDDM | Tertiary dodecyl mercaptan from Sartomer, Exton, PA, as a chain transfer agent |
| IEM | 2-isocyanatoethyl methacrylate from TCI America, Portland, OR |
| p-AA | 5,6-O-isopropylidene-L-Ascorbic Acid synthesized as described below |
| L-AA | L-ascorbic acid |
| acetone | Acetone |
| 2,2-DMP | 2,2-dimethoxypropane |
| CSA | Camphorsulfonic acid |
| TEA | Triethylamine |
| hexanes | Hexanes |
| d6-DMSO | Hexadeuterodimethyl sulfoxide |
| SR351H | Trimethylolpropane triacrylate (TMPTA), is a low viscosity, low volatility liquid monomer from Sartomer, Exton, PA |
| AscPalm | L-Ascorbic acid 6-palmitate (99%) from Alfa Aesar, Ward Hill, MA |
| RL1 | Siliconized poly-coated kraft release liner |
| RL2 | Embossed dual side siliconized polyethylene-coated polyester release liner, made as described in Example 1 of European Patent Publication No.1800865 A1 |
| CHP | Cumene hydroperoxide (80%, tech) from Alfa Aesar, Ward Hill, MA |
| UPUV | 3M^{™} VHB^{™} Universal Primer UV from 3M Company, St. Paul, MN |
| CN2281 | Low viscosity, polyester acrylate oligomer from Sartomer, Exton, PA |
| CN991 | Low viscosity aliphatic polyester-based urethane diacrylate oligomer from Sartomer, Exton, PA |
| BP | Synthetic micronized iron oxide Fe₃O₄ black pigment available from LANXESS, Pittsburgh, PA as BAYFERROX 318NM |
| RP | Synthetic micronized, yellowish iron oxide Fe₂O₃ red pigment available from LANXESS, Pittsburgh, PA as BAYFERROX 110BM |
| YP | Synthetic iron hydroxide α-FeO(OH) yellow pigment available from LANXESS, Pittsburgh, PA as BAYFERROX 915 |
| SR355 | Ditrimethylolpropane tetraacrylate, is a low skin irritation tetrafunctional monomer from Sartomer, Exton, PA |
| CuN | Copper (II) naphthenate in mineral spirits (8% Cu) obtained from Strem Chemicals, Newburyport, MA |
| IMS | Isopropyl myristate from Sigma-Aldrich, St. Louis, MO, as a low vapor pressure plasticizer |
| CN3 10 | A flexible hydrophobic urethane acrylate oligomer from Sartomer, Exton, PA |
| CN294E | A clear liquid tetrafunctional acrylated polyester oligomer from Sartomer, Exton, PA |

### Preparation of Acrylic Polymer Solution (Acrylic PS)

Acrylic Polymer Solution was generally prepared according to the description provided in column 6, lines 26-46 of U.S. Patent No. 4,074,004, except that the acid content was 10 weight percent (wt%).

### Preparation of Polyester Polymer Solution (Polyester PS)

Polyester Polymer Solution was prepared by adding 50.0 g of 3550B and 50.0 g of MEK to a glass jar and placing the jar on a jar roller until the polymer was dissolved.

### Preparation of Polyurethane Polymer Solution (Polyurethane PS)

To a resin reaction vessel equipped with a mechanical stirrer, a condenser, a thermocouple and a nitrogen inlet were added 800 g hydroxyl terminated polyester PH-56 (a hydroxyl value of 57.3 mg KOH/g), 4.4 g DMPA, and 67 g MEK. The solution was then heated up to 70 °C with stirring and added 0.44g g DBTDA and 74.2 g of DESMODUR H. Then, the temperature was maintained at 80 ± 2 °C until the reaction was completed. During the reaction, the desired amount of MEK was added into the system to dilute (i.e., reduce the viscosity of) the system. The reaction was completed when no isocyanate groups existed, which was monitored by using FT-IR for the disappearance of the NCO peak at around 2274 cm-1. Finally, the clear viscous solution with a solid content of 40 wt. % was obtained.

### Synthesis of Polyamide Polymer (RK-29)

The following charges were added to a 1L resin flask at room temperature: 645g of PRIPOL 1013, 94.1g of piperazine, and 0.29g of a solution of 85% phosphoric acid. The resin flask was fitted with a thermocouple, overhead mechanical stirrer, a distillation head and an electric heating mantle that was attached to a temperature controller. The flask was gently purged with nitrogen gas while heating to 160°C over 90 minutes. During this period, water by-product began to be collected in the distillation head receiver. Once the reaction mixture attained 160°C, the contents were held at this temperature for 75 min followed by a ramp to 225°C over 45 min during which time the collection of water distillate was substantially completed. The reaction mixture was held at 225°C for 60 min followed by introduction of a 20 mmHg vacuum in the flask over a period of 20 min. The vacuum was held for 60 min and at the end of this period, the vacuum was broken with nitrogen gas. The contents of the flask were collected on a Teflon^{™} sheet and allowed to cool to room temperature spontaneously. The product was collected with a yield of 618 g.

### Preparation of Polyamide Polymer Solution (Polyamide PS)

Polyamide Polymer Solution was prepared by adding 50.0 g of RK-29 and 50.0 g of a 1:1 (w/w) mixture of toluene and IPA to a glass jar and placing the jar on a jar roller until the polyamide polymer was dissolved.

### Synthesis of Reactive Polyester Polymer (F-584)

A reactive polyester polymer was synthesized as described in Example 1 of U.S. Patent Publication No. 20180237585.

### Preparation of Reactive Polyester Polymer Solution (Reactive Polyester PS)

Reactive Polyester Polymer Solution was prepared by adding 30.08 g of F-584 and 70.02 g of MEK to a glass jar and placing the jar on a jar roller until the polyester polymer dissolved.

### Preparation of stock solution of TBAC (TBAC STOCK)

Weighed to a glass vial were the following: 0.1 g of TBAC, 0.9 g of HEMA and 8.12 g of EtOAc. The contents were stirred at room temperature until a clear solution was obtained.

### Preparation of stock solution of Copper Acetate (CAS)

Weighed to a MAX 20 Speedmixer cup were the following: 2 g of Cu(OAc)₂, and 18 g of Glypho. The contents were mixed at room temperature using a magnetic stirrer for 18 hours.

### Synthesis of Reactive Oligomer A

Reactive Oligomer A was prepared generally according to the following procedure. 12 g of 2EHA, 50 g of CHA, 30 g of BA, 5 g of Acm, 3 g of HPA, 0.1 g of VAZO-52, 0.1 g of TDDM, and 100 g of EtOAc were added to a glass bottle. The contents were mixed and bubbled with nitrogen for 4 minutes before being sealed and placed in a Launder-Ometer rotating water bath for 24 hours at 60°C. In a second step, 0.52 g IEM and 40 g MEK were added to the bottle. The bottle was sealed with polytetrafluoroethylene tape and rolled on an IR-lamp-heated roller designed to reach a temperature of 60°C for 24 h. The weight average molecular weight of the resulting polymer was approximately 298 kDa as determined by the "Determination of Molecular Weight Distribution" test method described below.

### Synthesis of 5,6-O-isopropvlidene-L-Ascorbic Acid (p-AA)

This material was prepared according to literature precedence (Bioorg. Med. Chem. 2003, vol. 11, 827). To a suspension of L-AA (20.0 g, 114 mmol) in acetone (200 mL) was added 2,2-DMP (20.4 g, 196 mmol) and CSA (1.32 g, 5.68 mmol). The resultant mixture was allowed to stir overnight at room temperature. To the resultant slurry was added approximately 0.6 g TEA. A portion of hexane was added to the mixture, and the white precipitate was collected via vacuum filtration, washing with additional hexane. The material was dried under vacuum to afford the desired product (21.0 g, 86% yield). ¹H NMR (d6-DMSO, 500 MHz) was consistent with the desired product.

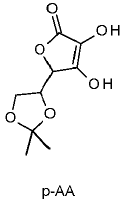

### TEST METHODS

### Overlap Shear Tests

Rectangular aluminum substrates measuring1 inch by 4 inch by 0.064 inch (2.5 cm by 10 cm by 1.6 mm) were washed with acetone, followed by 50/50 water/IPA solution, and a second wash of acetone followed by air-drying. For control specimens, a 1 inch by 1 inch (2.5 cm by 2.5 cm) portion of the tape sample (adhesive composition coated on release liner) was applied to the terminal end of a first substrate that did not have any primer applied on the surface (an "unprimed" aluminum substrate). The release liner was removed and a second "unprimed" aluminum substrate was applied to the sample adhesive, thus closing the bond (bond area 1 inch by 1 inch (2.5 cm by 2.5 cm)) and forming a test assembly. The test assembly was wet out by means of placing a 500 g weight directly onto the overlap area for 15 min. The weight was removed, and the bonded test assembly was dwelled at room temperature for 18 to 24 h prior to testing.

A dynamic overlap shear test was performed at ambient temperature using an MTS SINTECH Tensile Tester. Test specimens were loaded into the grips and the crosshead was operated at 0.1" per minute, loading the specimen to failure. Stress at break was recorded in units of psi.

### Overlap Shear Test for 2-tape samples

Rectangular aluminum substrates measuring 1 inch by 4 inch by 0.064 inch (2.5 cm by 10 cm by 1.6 mm) were washed with acetone, followed bv 50/50 water/IPA solution, and a second wash of acetone followed by air-drying. A 1 inch by 1-inch (2.5 cm by 2.5 cm) portion of the side A tape sample was applied to the terminal end of a first substrate. A 1 inch by 1-inch (2.5 cm by 2.5 cm) portion of the side B tape sample was applied to the terminal end of a second substrate. The release liners were removed and the second aluminum substrate with side B tape was applied to the first aluminum substrate with side A tape, thus closing the bond (bond area 1 inch by 1 inch (2.5 cm by 2.5 cm)) and forming a test assembly. In example 1 the bonded area of the test assembly was clamped between two metal binder clips and dwelled at room temperature for 48 hours. For examples 2 and 3 the test assembly was wet out by means of placing a 500 g weight directly onto the overlap area for 15 min. The weight was removed, and the bonded test assembly was dwelled at room temperature for 18 to 24 h prior to testing. A dynamic overlap shear test was performed at ambient temperature using an MTS SINTECH Tensile Tester. Test specimens were loaded into the mechanical grips and the crosshead was operated at 0.1" per minute, loading the specimen to failure. Stress at break was recorded in units of kPa and psi.

### Determination of Molecular Weight Distribution

The molecular weight distribution of the compounds was characterized using conventional gel permeation chromatography (GPC). The GPC instrumentation, which was obtained from Waters Corporation (Milford, MA, USA), included a high-pressure liquid chromatography pump (Model 1515HPLC), an auto-sampler (Model 717), a UV detector (Model 2487), and a refractive index detector (Model 2410). The chromatograph was equipped with two 5-micron PLgel MIXED-D columns, available from Varian Inc. (Palo Alto, CA, USA).

Samples of polymeric solutions were prepared by dissolving polymer or dried polymer materials in tetrahydrofuran at a concentration of 0.5 percent (weight/volume) and filtering through a 0.2-micron polytetrafluoroethylene filter that is available from VWR International (West Chester, PA, USA). The resulting samples were injected into the GPC and eluted at a rate of 1 milliliter per minute through the columns maintained at 35°C. The system was calibrated with polystyrene standards using a linear least square fit analysis to establish a calibration curve. The weight average molecular weight (Mw) and the polydispersity index (weight average molecular weight divided by number average molecular weight) were calculated for each sample against this standard calibration curve.

### EXAMPLES

### CURABLE ADHESIVE FILMS (CAP) 1-5

Curable Adhesive Films 1-5 were prepared using the ingredients in the amounts shown in Table 1, below. Reactive Oligomer A, SR351H and CN983 were added to a MAX 20 Speedmixer cup (Flacktek Inc, Landrum, SC) and mixed at 3000 rpm for 1 minute in a DAC 150.1 FVZ-K Speedmixer (Flacktek Inc). Remaining components were then added and the composition was mixed at 3000 rpm until the AscPalm was dissolved. The resulting composition was applied to a 15.25 cm (6 inches) wide notchbar coater on the desired liner at a 15 mil (635 micrometers) gap. Coated liners were dried in a solvent oven at 70°C for 30 minutes to form curable adhesive films. These films were covered with release liner of the type indicated in Table 1 and described in the Materials table.

**Table 1: Curable Adhesive Films 1-5**

| Curable Adhesive Film | Reactive Oligomer A (g) | SR351H (g) | CN983 (g) | AscPalm (g) | TBAC STOCK (g) | IPA (g) | EtOAc (g) | Liner |
|---|---|---|---|---|---|---|---|---|
| Curable Adhesive Film 1 | 12.50 | 3.00 | 0 | 0.40 | 0.15 | 2.00 | 0 | RL1 |
| Curable Adhesive Film 2 | 12.50 | 3.00 | 0 | 0.40 | 0.15 | 2.00 | 0 | RL2 |
| Curable Adhesive Film 3 | 12.50 | 3.00 | 0 | 0.20 | 0.15 | 2.00 | 0 | RL2 |
| Curable Adhesive Film 4 | 12.50 | 3.00 | 1.00 | 0.20 | 0.15 | 2.00 | 4.50 | RL2 |
| Curable Adhesive Film 5* | 12.50 | 3.00 | 1.00 | 0.20 | 0.15 | 2.00 | 4.50 | RL2 |

| | | | | | | | | |
|---|---|---|---|---|---|---|---|---|
| *Curable Adhesive Film 5 is a double-coated construction prepared by adding the quantities specified in Table 1 of Reactive Oligomer A, SR351H and CN983 into a DAC speedmixer cup and mixing at 3000 rpm for 1 minute. The remaining components (AscPalm, TBAC STOCK, IPA and EtOAc) are then added and the cup is stirred at 3000 rpm until the AscPalm is dissolved in. The resulting adhesive composition is coated in handspread form on the first side of a polyester film at a 25-mil (635 micrometer) wet gap to form an adhesive film borne on a support layer. This handspread is dried in a solvent oven at 70°C for 30 minutes. The adhesive composition is then coated on the second side of the polyester fil and allowed to dry, under the same application and drying conditions of the first side. | | | | | | | | |

### CURABLE ADHESIVE FILMS (CAP) 6-17

Curable Adhesive Films 6-17 were prepared as described in Curable Adhesives 1-5, above, except that (i) the ingredients used are listed and quantified in Tables 2 and 3, below; and (ii) the resulting compositions were coated at a 25 mil (635 micrometer) gap.

**Table 2: Curable Adhesive Films 6-11**

| **Curable Adhesive Films** | **CAF 6** | **CAF 7** | **CAF 8** | **CAF 9** | **CAF 10** | **CAF 11** |
|---|---|---|---|---|---|---|
| Acrylic PS (g) | 12.2 | 0 | 0 | 0 | 0 | 0 |
| Polyester PS (g) | 0 | 13.5 | 0 | 0 | 0 | 0 |
| Polyurethane PS (g) | 0 | 0 | 56.4 | 11.2 | 10.8 | 11.5 |
| Polyamide PS (g) | 0 | 0 | 0 | 0 | 0 | 0 |
| Reactive Polyester PS (g) | 0 | 0 | 0 | 0 | 0 | 0 |
| SR351H (g) | 1.62 | 0 | 0 | 0 | 0 | 0 |
| CN2281 (g) | 0 | 4.81 | 0 | 0 | 0 | 0 |
| CN991 (g) | 0 | 0 | 36.6 | 7.42 | 7.55 | 7.4 |
| CN310 (g) | 0 | 0 | 0 | 0 | 0 | 0 |
| CN294E (g) | 0 | 0 | 0 | 0 | 0 | 0 |
| AscPalm (g) | 0.62 | 0.43 | 1.8 | 0.38 | 0.34 | 0 |
| TBAC STOCK (g) | 0 | 0.16 | 0.68 | 0.13 | 0.14 | 0.12 |
| BP (g) | 0 | 0 | 0 | 0.19 | 0.4 | 0.37 |
| RP (g) | 0 | 0 | 0 | 0 | 0 | 0 |
| YP (g) | 0 | 0 | 0 | 0 | 0 | 0 |
| IPA (g) | 2.0 | 1.08 | 4.51 | 0.87 | 0.86 | 0.91 |
| EtOAc (g) | 2.15 | 0 | 0 | 0 | 0 | 0 |
| Coated on Liner | RL2 | RL2 | RL2 | RL2 | RL2 | RL2 |
| Cover Liner | RL1 | RL1 | RL1 | RL1 | RL1 | RL1 |

**Table 3. Curable Adhesive Films 12-17**

| **Curable Adhesive Films** | **CAF 12** | **CAF 13** | **CAF 14** | **CAF 15** | **CAF 16** | **CAF 17** |
|---|---|---|---|---|---|---|
| Acrylic PS (g) | 0 | 0 | 0 | 0 | 0 | 0 |
| Polyester PS (g) | 0 | 0 | 0 | 0 | 0 | 0 |
| Polyurethane PS (g) | 11.1 | 10.8 | 11.1 | 10.9 | 0 | 0 |
| Polyamide PS (g) | 0 | 0 | 0 | 0 | 10.1 | 0 |
| Reactive Polyester PS (g) | 0 | 0 | 0 | 0 | 0 | 12.3 |
| SR351H (g) | 0 | 0 | 0 | 0 | 0 | 0 |
| CN2281 (g) | 0 | 0 | 0 | 0 | 0 | 0 |
| CN991 (g) | 7.51 | 7.56 | 7.41 | 7.67 | 0 | 0 |
| CN310 (g) | 0 | 0 | 0 | 0 | 7.6 | 0 |
| CN294E (g) | 0 | 0 | 0 | 0 | 0 | 6.24 |
| AscPalm (g) | 0.35 | 0.38 | 0.35 | 0.35 | 0.33 | 0.41 |
| TBAC STOCK (g) | 0.16 | 0.13 | 0.15 | 0.15 | 1.21 | 0.15 |
| BP (g) | 0 | 0 | 0 | 0 | 0 | 0 |
| RP (g) | 0.13 | 0.39 | 0 | 0 | 0 | 0 |
| YP (g) | 0 | 0 | 0.14 | 0.39 | 0 | 0 |
| IPA (g) | 0.92 | 0.85 | 0.92 | 0.96 | 0.84 | 1 |
| EtOAc (g) | 0 | 0 | 0 | 0 | 0 | 0 |
| Coated on Liner | RL2 | RL2 | RL2 | RL2 | RL2 | RL2 |
| Cover Liner | RL1 | RL1 | RL1 | RL1 | RL1 | RL1 |

### PRIMERS (P) 1-16

Primers 1-16 were prepared by mixing the ingredients shown in Tables 4 and 5, below, in a glass vial and stirring the contents until a clear solution was obtained.

**Table 4: Primers 1-8**

| **Primer** | **P1** | **P2** | **P3** | **P4** | **P5** | **P6** | **P7** | **P8** |
|---|---|---|---|---|---|---|---|---|
| IPA (g) | 20 | 20 | 20 | 20 | 20 | 10.03 | 0 | 0 |
| CHP (g) | 0.8 | 0.8 | 0.8 | 0.8 | 0.8 | 0.4 | 0.8 | 0.82 |
| CAS (g) | 0.06 | 0.09 | 0.18 | 0.18 | 0.54 | 0.27 | 0.36 | 0.4 |
| UPUV (g) | 0 | 0 | 0 | 0 | 0 | 0 | 20 | 0 |
| Reactive Oligomer A (g) | 1 | 1 | 1 | 1 | 1 | 0 | 0 | 0 |
| Reactive Polyester Polymer Solution (g) | 0 | 0 | 0 | 0 | 0 | 0 | 0 | 0 |
| Acrylic Polymer Solution (g) | 0 | 0 | 0 | 0 | 0 | 0.5 | 0 | 0 |
| Polyester Polymer Solution (g) | 0 | 0 | 0 | 0 | 0 | 0 | 0 | 1 |
| Polyurethane Polymer Solution (g) | 0 | 0 | 0 | 0 | 0 | 0 | 0 | 0 |
| SR351H (g) | 0.16 | 0.16 | 0.16 | 0.16 | 0.16 | 0.08 | 0 | 0 |
| CN991 (g) | 0 | 0 | 0 | 0 | 0 | 0 | 0 | 0 |
| CN2281 (g) | 0 | 0 | 0 | 0 | 0 | 0 | 0 | 0.16 |
| CN310 (g) | 0 | 0 | 0 | 0 | 0 | 0 | 0 | 0 |
| CN294E (g) | 0 | 0 | 0 | 0 | 0 | 0 | 0 | 0 |
| IMS (g) | 0 | 0 | 0 | 4 | 4 | 0 | 0 | 0 |
| Toluene (g) | 0 | 0 | 0 | 0 | 0 | 0 | 0 | 20 |

**Table 5: Primers 9-16**

| **Primer** | **P9** | **P10** | **P11** | **P12** | **P13** | **P14** | **P15** | **P16** |
|---|---|---|---|---|---|---|---|---|
| IPA (g) | 0 | 0 | 0 | 0 | 0 | 0 | 0 | 0 |
| CHP (g) | 0.8 | 0.86 | 0.8 | 0.87 | 0.8 | 0.81 | 0.85 | 0.83 |
| CAS (g) | 0.36 | 0.36 | 0.36 | 0 | 0.59 | 0.4 | 0.38 | 0.37 |
| UPUV (g) | 20 | 0 | 20 | 20.01 | 0 | 20.05 | 0 | 20.05 |
| Reactive Oligomer A (g) | 0 | 0 | 0 | 0 | 0 | 0 | 0 | 0 |
| Reactive Polyester Polymer Solution (g) | 0 | 0 | 0 | 0 | 0 | 0 | 1.02 | 0 |
| Acrylic Polymer Solution (g) | 0 | 0 | 0 | 0 | 0 | 0 | 0 | 0 |
| Polyester Polymer Solution (g) | 0 | 0 | 0 | 0 | 0 | 0 | 0 | 0 |
| Polyurethane Polymer Solution (g) | 0 | 1.07 | 0 | 0 | 0 | 0 | 0 | 0 |
| SR351H (g) | 0 | 0 | 0 | 0 | 0 | 0 | 0 | 0 |
| CN991 (g) | 0 | 0.16 | 0 | 0 | 0 | 0 | 0 | 0 |
| CN2281 (g) | 0 | 0 | 0 | 0 | 0 | 0 | 0 | 0 |
| CN310 (g) | 0 | 0 | 0 | 0 | 0.17 | 0 | 0 | 0 |
| CN294E (g) | 0 | 0 | 0 | 0 | 0 | 0 | 0.18 | 0 |
| IMS (g) | 0 | 0 | 0 | 0 | 0 | 0 | 0 | 0 |
| Toluene (g) | 0 | 20 | 0 | 0 | 20.1 | 0 | 20.02 | 0 |

### ADHESIVE SYSTEMS 1-25 AND COMPARATIVE ADHESIVE SYSTEMS A-K

Adhesive Systems 1-25 were prepared by applying primer compositions to an aluminum substrate, followed by the application of the adhesive side of the curable adhesive films to the primer, as described in detail in the Overlap Shear test method, above. In Comparative Adhesive Systems A-K, primers were not used, and the curable adhesive films were applied directly to the untreated aluminum substrates. Compositions of the curable adhesive films and primers used in Adhesive Systems 1-25 and Comparative Adhesive Systems A-K are shown in Tables 6, below.

**Table 6. Adhesive Systems 1-25 and Comparative Adhesive Systems A-K**

| **Adhesive Systems** | **Curable Adhesive Film** | **Primer** |
|---|---|---|
| Comparative Adhesive System A | CAF 1 | None |
| Comparative Adhesive System B | CAF 2 | None |
| Comparative Adhesive System C | CAF 3 | None |
| Adhesive System 1 | CAF 1 | P 1 |
| Adhesive System 2 | CAF 1 | P 2 |
| Adhesive System 3 | CAF 1 | P 3 |
| Adhesive System 4 | CAF 2 | P 3 |
| Adhesive System 5 | CAF 3 | P 4 |
| Adhesive System 6 | CAF 3 | P 5 |
| Adhesive System 7 | CAF 4 | P 5 |
| Adhesive System 8 | CAF 5 | Not tested |
| Adhesive System 9 | CAF 6 | P 6 |
| Adhesive System 10 | CAF 6 | P 7 |
| Comparative Adhesive System D | CAF 6 | None |
| Adhesive System 11 | CAF 7 | P 8 |
| Adhesive System 12 | CAF 7 | P 9 |
| Comparative Adhesive System E | CAF 7 | None |
| Adhesive System 13 | CAF 8 | P 10 |
| Adhesive System 14 | CAF 8 | P 11 |
| Comparative Adhesive System F | CAF 8 | None |
| Adhesive System 15 | CAF 9 | P 12 |
| Comparative Adhesive System G | CAF 10 | None |
| Adhesive System 16 | CAF 10 | P 12 |
| Adhesive System 17 | CAF 11 | P 12 |
| Adhesive System 18 | CAF 12 | P 12 |
| Comparative Adhesive System H | CAF 13 | None |
| Adhesive System 19 | CAF 13 | P 12 |
| Adhesive System 20 | CAF 14 | P 12 |
| Comparative Adhesive System I | CAF 15 | None |
| Adhesive System 21 | CAF 15 | P 12 |
| Adhesive System 22 | CAF 16 | P 13 |
| Adhesive System 23 | CAF 16 | P 14 |
| Comparative Adhesive System J | CAF 16 | None |
| Adhesive System 24 | CAF 17 | P 15 |
| Adhesive System 25 | CAF 17 | P 16 |
| Comparative Adhesive System K | CAF 17 | None |

Overlap shear of Adhesive Systems 1-25 and Comparative Adhesive Systems A-K was measured using the procedure described in Test Methods, above. Three replicates were prepared for each Adhesive System. The results of the overlap shear measurements are listed below in Table 7.

**Table 7: Overlap Shear Results**

| **Adhesive Systems** | **OLS Average Peak Stress (psi)** | **OLS Average Peak Stress (kPa)** |
|---|---|---|
| Comparative Adhesive System A | 4.00 | 28.00 |
| Comparative Adhesive System B | 5.00 | 34.00 |
| Comparative Adhesive System C | 5.00 | 34.00 |
| Adhesive System 1 | 348.00 | 2400.00 |
| Adhesive System 2 | 422.00 | 2910.00 |
| Adhesive System 3 | 487.00 | 3360.00 |
| Adhesive System 4 | 942.00 | 6500.00 |
| Adhesive System 5 | 359.00 | 2477.00 |
| Adhesive System 6 | 748.00 | 5160.00 |
| Adhesive System 7 | 778.00 | 5364.00 |
| Adhesive System 8 | Not Tested | Not Tested |
| Adhesive System 9 | 450.67 | 3107.35 |
| Adhesive System 10 | 15.33 | 105.72 |
| Comparative Adhesive System D | 9.33 | 64.35 |
| Adhesive System 11 | 154.38 | 1064.47 |
| Adhesive System 12 | 72.50 | 499.91 |
| Comparative Adhesive System E | 1.08 | 7.42 |
| Adhesive System 13 | 154.69 | 1066.61 |
| Adhesive System 14 | 252.43 | 1740.50 |
| Comparative Adhesive System F | 2.12 | 14.62 |
| Adhesive System 15 | 306.18 | 2111.09 |
| Comparative Adhesive System G | 1.11 | 7.65 |
| Adhesive System 16 | 208.14 | 1435.15 |
| Adhesive System 17 | 226.60 | 1562.43 |
| Adhesive System 18 | 264.40 | 1823.02 |
| Comparative Adhesive System H | 1.25 | 8.62 |
| Adhesive System 19 | 238.89 | 1647.17 |
| Adhesive System 20 | 233.75 | 1611.73 |
| Comparative Adhesive System I | 1.48 | 10.23 |
| Adhesive System 21 | 290.63 | 2003.89 |
| Adhesive System 22 | 51.04 | 351.90 |
| Adhesive System 23 | 32.58 | 224.62 |
| Comparative Adhesive System J | 1.29 | 8.92 |
| Adhesive System 24 | 10.06 | 69.36 |
| Adhesive System 25 | 12.86 | 88.69 |
| Comparative Adhesive System K | 2.95 | 20.34 |

## Claims

1. An adhesive system comprising:
I) a curable adhesive free-standing film comprising a blend of:
a) a first film-forming polymer or oligomer;
b) a first species comprising first unsaturated free-radically polymerizable groups, which may be a) or a species other than a); and
c) a first transition metal cation; and
II) a primer for adhesion of a curable adhesive free-standing film to a first substrate, the primer comprising:
d) an oxidizing agent;
wherein the primer is a liquid at normal temperature and pressure.

2. The adhesive system according to claim 1, wherein b) is a).

3. The adhesive system according to claim 1, wherein b) is a species other than a), wherein a) does not comprise unsaturated free-radically polymerizable groups.

4. The adhesive system according to claim 3, wherein a) is selected from the group consisting of acrylic polymers, rubber polymers, polyester polymers, polyurethane polymers, polyamide polymers, and combinations thereof.

5. The adhesive system according to any of claims 1 to 3, wherein the primer comprises no tackifier.

6. The adhesive system according to any of claims 1 to 3 and 5, wherein the primer comprises no species comprising unsaturated free-radically polymerizable groups.

7. The adhesive system according to any of claims 1 to 3, 5 and 6, wherein the curable adhesive free-standing film comprises an outer surface bearing embossed air bleed channels capable of aiding in escape of air during application of the outer surface to a substrate.

8. The adhesive system according to any of claims 1 to 7, wherein the curable adhesive free-standing film is comprised in a tape.

9. The adhesive system according to claim 8, wherein the tape additionally comprises a support layer borne on the curable adhesive free-standing film layer.

10. The adhesive system according to claim 8, wherein the tape additionally comprises a support layer directly bound to the curable adhesive free-standing film layer.

11. A construction (110; 210; 310) comprising:
i) a first cured primer layer (130; 230; 330) obtained by cure of the primer according to any of claims 1 to 10 directly bound to
ii) a first cured structural adhesive layer (140; 240; 340) obtained by cure of the curable adhesive free-standing film according to any of claims 1 to 10.

12. The construction (110; 210; 310) according to claim 11, further comprising:
iii) a first substrate (120; 220; 320) directly bound to the first cured primer layer (130; 230; 330).

13. The construction (110) according to claim 12, further comprising:
v) a second substrate (125) directly bound to the first cured structural adhesive layer (140).

14. The construction (210) according to claim 12, further comprising:
iv) a second cured primer layer (235) obtained by cure of a primer according to any of claims 1 to 10 chosen independently of the first cured primer layer, wherein the second cured primer layer (235) is directly bound to the first cured structural adhesive layer (240); and
v) a second substrate (225) directly bound to the second cured primer layer (235).

15. The construction (310) according to claim 12, further comprising:
viii) a support layer (350) borne on the first cured structural adhesive layer (340).

16. The construction (310) according to claim 15, further comprising:
ix) a second cured structural adhesive layer (345) obtained by cure of a curable adhesive free-standing film according to any of claims 1 to 10 chosen independently of the first cured structural adhesive layer (340), wherein the second cured structural adhesive (345) layer is borne on the support layer (350).

17. The construction (310) according to claim 16, further comprising:
iv) a second cured primer layer (335) obtained by cure of a primer according to any of claims 1 to 10 chosen independently of the first cured primer layer (330); wherein the second cured primer layer (335) is directly bound to the second cured structural adhesive layer (345); and
v) a second substrate (325) directly bound to the second cured primer layer (335).

## Patentansprüche

1. Ein Klebstoffsystem, umfassend:
I) eine härtbare, klebende, freistehende Folie, umfassend eine Mischung aus:
a) einem ersten folienbildenden Polymer oder Oligomer;
b) einer ersten Spezies, umfassend erste ungesättigte radikalisch polymerisierbare Gruppen, die a) oder eine andere Spezies als a) sein können; und
c) einem ersten Übergangsmetallkation; und
II) einen Primer für Adhäsion einer härtbaren, klebenden, freistehenden Folie an ein erstes Substrat, wobei der Primer umfasst:
d) ein Oxidationsmittel;
wobei der Primer bei Normaltemperatur und Normaldruck eine Flüssigkeit ist.

2. Das Klebstoffsystem nach Anspruch 1, wobei b) a) ist.

3. Das Klebstoffsystem nach Anspruch 1, wobei b) eine andere Spezies als a) ist, wobei a) keine ungesättigten radikalisch polymerisierbaren Gruppen umfasst.

4. Das Klebstoffsystem nach Anspruch 3, wobei a) aus der Gruppe ausgewählt ist, bestehend aus Acrylpolymeren, Gummipolymeren, Polyesterpolymeren, Polyurethanpolymeren, Polyamidpolymeren und Kombinationen davon.

5. Das Klebstoffsystem nach einem der Ansprüche 1 bis 3, wobei der Primer keinen Klebrigmacher umfasst.

6. Das Klebstoffsystem nach einem der Ansprüche 1 bis 3 und 5, wobei der Primer keine Spezies, umfassend ungesättigte radikalisch polymerisierbare Gruppen, umfasst.

7. Das Klebstoffsystem nach einem der Ansprüche 1 bis 3, 5 und 6, wobei die härtbare, klebende freistehende Folie eine Außenoberfläche umfasst, die geprägte Entlüftungskanäle, die geeignet sind, um ein Entweichen von Luft während einer Aufbringung der Außenoberfläche auf ein Substrat zu unterstützen, trägt.

8. Das Klebstoffsystem nach einem der Ansprüche 1 bis 7, wobei die härtbare, klebende, freistehende Folie in einem Band enthalten ist.

9. Das Klebstoffsystem nach Anspruch 8, wobei das Band eine Trägerschicht, die auf der härtbaren, klebenden, freistehenden Folienschicht getragen wird, zusätzlich umfasst.

10. Das Klebstoffsystem nach Anspruch 8, wobei das Band eine Trägerschicht, die an die härtbare, klebende, freistehende Folienschicht direkt gebunden ist, zusätzlich umfasst.

11. Eine Konstruktion (110; 210; 310), umfassend:
i) eine erste gehärtete Primerschicht (130; 230; 330), die durch Härtung des Primers nach einem der Ansprüche 1 bis 10 erhalten wird, direkt gebunden an
ii) eine erste gehärtete strukturelle Klebstoffschicht (140; 240; 340), die durch Härtung der härtbaren, klebenden, freistehenden Folie nach einem der Ansprüche 1 bis 10 erhalten wird.

12. Die Konstruktion (110; 210; 310) nach Anspruch 11, ferner umfassend:
iii) ein erstes Substrat (120; 220; 320), das an die erste gehärtete Primerschicht (130; 230; 330) direkt gebunden ist.

13. Die Konstruktion (110) nach Anspruch 12, ferner umfassend:
v) ein zweites Substrat (125), das an die erste gehärtete strukturelle Klebstoffschicht (140) direkt gebunden ist.

14. Die Konstruktion (210) nach Anspruch 12, ferner umfassend:
iv) eine zweite gehärtete Primerschicht (235), die durch Härtung eines Primers nach einem der Ansprüche 1 bis 10, ausgewählt unabhängig von der ersten gehärteten Primerschicht, erhalten wird, wobei die zweite gehärtete Primerschicht (235) an die erste gehärtete strukturelle Klebstoffschicht (240) direkt gebunden ist; und
v) ein zweites Substrat (225), das an die zweite gehärtete Primerschicht (235) direkt gebunden ist.

15. Die Konstruktion (310) nach Anspruch 12, ferner umfassend:
viii) eine Trägerschicht (350), die auf der ersten gehärteten strukturellen Klebstoffschicht (340) getragen wird.

16. Die Konstruktion (310) nach Anspruch 15, ferner umfassend:
ix) eine zweite gehärtete strukturelle Klebstoffschicht (345), die durch Härtung einer härtbaren, klebenden freistehenden Folie nach einem der Ansprüche 1 bis 10, ausgewählt unabhängig von der ersten gehärteten strukturellen Klebstoffschicht (340), erhalten wird, wobei die zweite gehärtete strukturelle Klebstoffschicht (345) auf der Trägerschicht (350) getragen wird.

17. Die Konstruktion (310) nach Anspruch 16, ferner umfassend:
iv) eine zweite gehärtete Primerschicht (335), die durch Härtung eines Primers nach einem der Ansprüche 1 bis 10, ausgewählt unabhängig von der ersten gehärteten Primerschicht (330), erhalten wird; wobei die zweite gehärtete Primerschicht (335) an die zweite gehärtete strukturelle Klebstoffschicht (345) direkt gebunden ist; und
v) ein zweites Substrat (325), das an die zweite gehärtete Primerschicht (335) direkt gebunden ist.

## Revendications

1. Système adhésif comprenant :
I) un film adhésif autoportant durcissable comprenant un mélange de :
a) un premier polymère ou oligomère filmogène ;
b) une première espèce comprenant des premiers groupes insaturés polymérisables par radicaux libres, qui peuvent être a) ou une espèce autre que a) ; et
c) un premier cation de métal de transition ; et
II) un apprêt pour adhésion d'un film adhésif autoportant durcissable à un premier substrat, l'apprêt comprenant :
d) un agent oxydant ;
dans lequel l'apprêt est un liquide à température et pression ordinaires.

2. Système adhésif selon la revendication 1, dans lequel b) est a).

3. Système adhésif selon la revendication 1, dans lequel b) est une espèce autre que a), dans lequel a) ne comprend pas de groupes insaturés polymérisables par radicaux libres.

4. Système adhésif selon la revendication 3, dans lequel a) est choisi dans le groupe constitué de polymères acryliques, polymères de caoutchouc, polymères de polyester, polymères de polyuréthane, polymères de polyamide, et combinaisons de ceux-ci.

5. Système adhésif selon l'une quelconque des revendications 1 à 3, dans lequel l'apprêt ne comprend aucun agent poisseux.

6. Système adhésif selon l'une quelconque des revendications 1 à 3 et 5, dans lequel l'apprêt ne comprend aucune espèce comprenant des groupes insaturés polymérisables par radicaux libres.

7. Système adhésif selon l'une quelconque des revendications 1 à 3, 5 et 6, dans lequel le film adhésif autoportant durcissable comprend une surface externe comportant des canaux d'évacuation d'air gaufrés capable de faciliter l'échappement d'air pendant l'application de la surface externe à un substrat.

8. Système adhésif selon l'une quelconque des revendications 1 à 7, dans lequel le film adhésif autoportant durcissable est compris dans un ruban.

9. Système adhésif selon la revendication 8, dans lequel le ruban comprend en outre une couche de support portée par la couche de film adhésif autoportant durcissable.

10. Système adhésif selon la revendication 8, dans lequel le ruban comprend en outre une couche de support liée directement à la couche de film adhésif autoportant durcissable.

11. Construction (110 ; 210 ; 310) comprenant :
i) une première couche d'apprêt durci (130 ; 230 ; 330) obtenue par durcissement de l'apprêt selon l'une quelconque des revendications 1 à 10 liée directement à
ii) une première couche d'adhésif structural durci (140 ; 240 ; 340) obtenue par durcissement du film adhésif autoportant durcissable selon l'une quelconque des revendications 1 à 10.

12. Construction (110 ; 210 ; 310) selon la revendication 11, comprenant en outre :
iii) un premier substrat (120 ; 220 ; 320) lié directement à la première couche d'apprêt durci (130 ; 230 ; 330).

13. Construction (110) selon la revendication 12, comprenant en outre :
v) un second substrat (125) lié directement à la première couche d'adhésif structural durci (140).

14. Construction (210) selon la revendication 12, comprenant en outre :
iv) une seconde couche d'apprêt durci (235) obtenue par durcissement d'un apprêt selon l'une quelconque des revendications 1 à 10 choisie indépendamment de la première couche d'apprêt durci, dans laquelle la seconde couche d'apprêt durci (235) est liée directement à la première couche d'adhésif structural durci (240) ; et
v) un second substrat (225) lié directement à la seconde couche d'apprêt durci (235).

15. Construction (310) selon la revendication 12, comprenant en outre :
viii) une couche de support (350) portée sur la première couche d'adhésif structural durci (340).

16. Construction (310) selon la revendication 15, comprenant en outre :
ix) une seconde couche d'adhésif structural durci (345) obtenue par durcissement d'un film adhésif autoportant durcissable selon l'une quelconque des revendications 1 à 10 choisie indépendamment de la première couche d'adhésif structural durci (340), dans laquelle la seconde couche d'adhésif structural durci (345) est portée sur la couche de support (350).

17. Construction (310) selon la revendication 16, comprenant en outre :
iv) une seconde couche d'apprêt durci (335) obtenue par durcissement d'un apprêt selon l'une quelconque des revendications 1 à 10 choisie indépendamment de la première couche d'apprêt durci (330) ; dans laquelle la seconde couche d'apprêt durci (335) est liée directement à la seconde couche d'adhésif structural durci (345) ; et
v) un second substrat (325) lié directement à la seconde couche d'apprêt durci (335).
